# EUROPÄISCHE PATENTSCHRIFT

(11) **EP 3 777 519 B1**
(45) Veröffentlichungstag und Bekanntmachung des Hinweises auf die Patenterteilung: **22.11.2023**
(21) Anmeldenummer: 19191784.8
(22) Anmeldetag: 14.08.2019
(51) Int. Cl.: A01G 9/14, A01G 31/06

(54) **VERFAHREN ZUM AUTOMATISIERTEN BETREIBEN EINES GEWÄCHSHAUSES, VERSORGUNGSEINRICHTUNG UND AUTOMATISIERT BETREIBBARES GEWÄCHSHAUS**
METHOD FOR THE AUTOMATED OPERATION OF A GREENHOUSE, SUPPLY DEVICE AND AUTOMATICALLY OPERABLE GREENHOUSE
PROCÉDÉ DE FONCTIONNEMENT AUTOMATISÉ D'UNE SERRE, DISPOSITIF D'ALIMENTATION ET SERRE AUTOMATIQUE

(43) Veröffentlichungstag der Anmeldung: 17.02.2021
(73) Patentinhaber: Swisslog AG, 5033 Buchs/Aarau (CH)
(72) Erfinder: LAESKE, Kirt, 77933 Lahr (DE)
(74) Vertreter: Böss, Dieter Alexander

(56) Entgegenhaltungen:
- EP-A1- 3 453 252
- WO-A1-2013/165248
- CN-U- 207 340 466
- US-A1- 2018 235 156

## Beschreibung

Die Erfindung betrifft ein automatisiert betreibbares Gewächshaus.

Die WO 2019/109006 A1 beschreibt ein System zur Produktion landwirtschaftlicher Nahrungsmittel in Gebäuden mit mehreren Stockwerken, den sogenannten vertikalen Farmen (Engl.: vertikal farms, vertical farming).

Die CN 207340466 U beschreibt eine automatisierte Produktionslinie für Sprossengemüse, umfassend eine Maschine zum Einweichen von Saatgut, eine Pflanzmaschine, ein Anbaugestell und eine Erntemaschine, die nacheinander angeordnet sind.

Die WO 2013/165248 A1 beschreibt eine Anordnung zur Kultivierung von Pflanzen, insbesondere von Feldfrüchten, mit einem fest angeordneten Pfosten, der eine Aufhängung für eine Lichtquelle bildet, einem Wagen mit einem Träger, der relativ zur Stütze verschiebbar ist, und einem Behälter, der an dem Träger zur Aufnahme von mindestens einer Pflanze angeordnet werden kann.

Aufgabe der Erfindung ist es, ein automatisiert betreibares Gewächshaus zu schaffen, das die Produktion landwirtschaftlicher Nahrungsmittel in Gebäuden besonders wirtschaftlich, insbesondere unter geringem Personalbedarf mit hoher Energieeffizienz ermöglicht.

Die Aufgabe wird gelöst durch ein automatisiert betreibbares Gewächshaus nach Anspruch 1. Vorteilhafte Weiterbildungen ergeben sich aus den abhängigen Ansprüchen 2 bis 15.

Die Verfahrensschritte betreffen das automatisierte Betreiben des Gewächshauses. Insbesondere sind die Verfahrensschritte für ein vertikales Farmen vorgesehen. Gegenüber allgemeinen landwirtschaftlichen Gewächshäusern, die grundsätzlich in nur einer einzigen Pflanzebene betrieben werden und dabei zum Wachstum der Pflanzen lediglich das natürliche Sonnenlicht nutzen, sieht das vertikale Farmen die Verwendung von künstlichem Licht vor, so dass auf Grundlage der Verwendung von künstlichem Leuchtmitteln in mehreren Höhenlagen auch Pflanzen gedeihen können, die in mehreren Ebenen übereinander positioniert sind.

Die für das vertikale Farmen bisher bekannten Technologien sind noch im Entwicklungsstadium und basieren in der Regel auf Gewächshäusern, welche auf einer oder mehreren Ebenen betrieben werden. Dabei erfolgt der Pflanzenanbau durch Aeroponik oder Hydrokultur. In Verbindung mit Beleuchtungstechnik für das Pflanzenwachstum und Belüftungssystemen gedeihen die Pflanzen bis zur Ernte innerhalb des Gebäudes bzw. im Regal der Anlage d.h. der Gewächshäuser.

In den bekannten Regalsystemen für das vertikale Farmen wird automatisierte Technik sehr ähnlich der Hochregallagertechnik für Logistikanlagen eingesetzt. Diese Technik, die manuelle oder automatische Regalbediengeräte umfasst, handhabt im Regal eingesetzte und austauschbare Wannen, in denen die Pflanzen gedeihen. Um die Pflanzen zu ernten, verfahren Arbeiter auf den Regalbediengeräten oder die Wannen werden mittels aufwendiger Fördertechnik an den Ernteplatz befördert. Die Wanne kann schalenartig und/oder geschlossenwandig d.h. wasserdicht ausgebildet sein. Die Wannen enthalten den Pflanzenträger oder die Pflanzenträger. Die Wannen verbleiben im Gewächshaus, wo hingegen die Pflanzenträger aus den Wannen entfernt werden können und beispielsweise im Rahmen einer Ernte entnommen werden können. Die Pflanzenträger können beispielsweise einen festen Rahmen, insbesondere einen Aluminiumrahmen aufweisen. Der Rahmen begrenzt ein Gitter, auf dem die Pflanzen angeordnet sind. Das Gitter kann engmaschig ausgebildet sein.

Um den Einsatz von Technologien ähnlich der Lagertechnik wirtschaftlich betreiben zu können, ist es erforderlich möglichst hohe Höhen, beispielsweise 8 bis 20 Meter, auszunutzen, um mit möglichst wenig Regalbediengeräten und auch mit geringer Lagerfläche auszukommen. Die stationäre Lagerung im Regal hat weiter den Nachteil, dass es erforderlich ist, unterschiedliche Klimazonen innerhalb eines Raumes zu gestalten. So ist es zum Beispiel erforderlich Tag und Nacht zu generieren, indem die Beleuchtungssysteme einige Stunden angeschaltet d.h. in Betrieb sind und einige Stunden ausgeschaltet d.h. außer Betrieb sind. Für das optimale Klima müssen Temperatur und Feuchtigkeitsgehalt der Luft im Raum geregelt werden. Insbesondere in vertikalen Farmen (ohne Raumzwischendecken) im sehr hohen Höhen, beispielsweise über 5 Meter und mehr, ist es in den oberen Höhenlagen tendenziell zu warm und in unteren Höhenlagen tendenziell zu kalt. Dies bedeutet, dass es bei bekannten vertikalen Farmen schwierig ist über eine hohe Höhe ein annähernd konstantes Klima zu. Mit der erfindungsgemäßen technischen Lösung kann mit Raumhöhen von beispielsweise 2,5 Metern ausgekommen werden, so dass die genannten Nachteile nicht entstehen können.

Eine neue vertikale Farm muss in der Regel in neu gebauten Gebäudekomplexen eingerichtet werden, welche einzig zu diesem Zweck konstruiert sind. Die Verwendung von Bestandsgebäuden erfordert aufwendige Bodensanierungen, um automatische Regalbediengeräte einsetzen zu können. Um hohe automatisierbare Regalkonstruktionen verbauen zu können, müsste der Lagerboden außerdem enge Toleranzen beispielsweise nach FEM 9.841 einhalten.

Mit dem Verfahren zum automatisierten Betreiben eines Gewächshauses wird eine Lösung geschaffen mit der die Produktion landwirtschaftlicher Nahrungsmittel in Gebäuden besonders wirtschaftlich, insbesondere unter geringem Personalbedarf mit hoher Energieeffizienz möglich wird. Insbesondere können dadurch auch Bestandsbauten, wie beispielsweise Hochhäuser oder aufgelassene Fabriken, speziell in Großstädten, einer alternativen Nutzung als Gewächshäuser umfunktioniert werden.

Die Erfindung sieht unter anderem vor, das nicht jeder Pflanze oder jedem Pflanzträger eine künstliche Beleuchtung fest zugeordnet wird und ein Tag-/Nacht-Wechsel durch Anschalten und Ausschalten der künstlichen Beleuchtung simuliert wird, sondern dass die erfindungsgemäß vorhandenen Leuchtmittel der künstlichen Beleuchtung vorzugsweise dauerhaft eingeschaltet sind d.h. Licht aussenden und zur Simulation des Tag-/Nacht-Wechsels die Pflanzen bzw. die Pflanzträger für die Dauer des ersten Zeitabschnitts (simulierte Nachtzeit) automatisch in den ersten Pflanzenwachstumsraum gebracht werden, der ohne künstliche Beleuchtung betrieben wird und für die Dauer des zweiten Zeitabschnitts (simulierte Tagzeit) automatisch in den zweiten Pflanzenwachstumsraum gebracht werden, der mit künstlichen Leuchtmitteln zum Erzeugen von künstlichem Licht ausgestattet ist.

Die Pflanzen können insbesondere Pflanzen sein, die als Nahrungsmittel für Lebewesen dienen, also beispielsweise Gemüse, Obst, Küchenkräuter, Teepflanzen. Die Pflanzen können aber auch andere Nutzpflanzen sein, wie beispielsweise Arzneipflanzen, Kosmetikpflanzen oder Aromapflanzen.

Der sich in der Wanne befindliche Pflanzenträger bildet eine Aufnahme für das erforderliche Substrat auf dem die Pflanzen gedeihen. Gleichzeitig hat der Pflanzenträger die Funktion die in dem Substrat angepflanzten Pflanzen zu tragen. Der jeweilige Pflanzenträger kann ausgebildet sein zur Aufnahme einer einzelnen Pflanze. Alternativ kann der jeweilige Pflanzenträger ausgebildet sein zur gleichzeitigen Aufnahme mehrerer Pflanzen, insbesondere derselben Pflanzenart und/oder Pflanzensorte. Mehrere Pflanzenträger können auf derselben Ebene angeordnet sein. Alternativ oder ergänzend können mehrere Pflanzenträger auf mehreren unterschiedlichen Höhenebenen angeordnet sein. Die mehreren Pflanzenträger können insbesondere in einer oder mehreren Wannen an einem gemeinsamen mobilen Regalständer abgelegt und dadurch zusammen mit dem mobilen Regalständer gemeinsam automatisch transportiert werden. Jede Wanne kann ein oder mehrere Pflanzenträger aufweisen.

Zum automatischen Transportieren der Wannen mit Pflanzenträger zusammen mit dem Regalständer dient wenigstens eine automatisch angesteuerte Transportvorrichtung. Die eine Transportvorrichtung oder die mehreren Transportvorrichtungen können von bodengebundenen Fahrzeugen gebildet werden, die automatisch angesteuert navigiert werden. Die Fahrzeuge können beispielsweise in Art von an sich bekannten fahrerlosen Transportsystemen (FTS) ausgebildet sein. Alternativ können die Fahrzeuge in Art von mobilen Robotern ausgebildet sein.

Das automatische Transportieren erfolgt gemäß einem oder mehreren Ausführung der erfindungsgemäßen Verfahren und kann durch eine Steuervorrichtung gesteuert werden, die gemäß einer oder mehreren Ausführungen der erfindungsgemäßen Verfahren ausgebildet und beispielsweise mittels eines gespeicherten Programms entsprechend eingerichtet ist, das Verfahren durchzuführen. Dies kann dadurch erfolgen, das die Steuervorrichtung die wenigstens eine Transportvorrichtung entsprechend ansteuert, bewegt und zumindest zwischen dem ersten Pflanzenwachstumsraum und dem zweiten Pflanzenwachstumsraum hin und her navigiert.

Ein hin und her Transportieren des wenigstens einen Pflanzenträgers mittels der Transportvorrichtung bedeutet ein wahlweises Ändern der aktuellen Position und/oder Lage der Pflanzenträger nicht nur aus dem ersten Pflanzenwachstumsraum heraus und in den zweiten Pflanzenwachstumsraum hinein, sondern auch ein Ändern der aktuellen Position und/oder Lage der Pflanzenträger aus dem zweiten Pflanzenwachstumsraum heraus und in den ersten Pflanzenwachstumsraum hinein. Des Weiteren umfasst das hin und her Transportieren auch das Verbringen des wenigstens einen Pflanzenträgers in einen anderen Raum oder eine andere Station, wie beispielsweise in die erfindungsgemäße Analysestation oder in die erfindungsgemäße Beschickungsstation, sowie das Holen des wenigstens einen Pflanzenträgers aus einem anderen Raum oder einer anderen Station, wie beispielsweise aus der erfindungsgemäßen Analysestation oder aus der erfindungsgemäßen Beschickungsstation.

Die jeweilige Dauer des ersten Zeitabschnitts, in dem sich die Pflanzen ohne den Einfluss von künstlichem Licht in dem ersten Pflanzenwachstumsraum weiterentwickeln, und die jeweilige Dauer des zweiten Zeitabschnitts, in dem sich die Pflanzen unter dem Einfluss von künstlichem Licht in dem zweiten Pflanzenwachstumsraum weiterentwickeln, kann individuell bestimmt werden. Die jeweilige Dauer des ersten Zeitabschnitts und des zweiten Zeitabschnitts kann beispielsweise in Abhängigkeit der Pflanzenart festgelegt werden. Die jeweilige Dauer des ersten Zeitabschnitts und des zweiten Zeitabschnitts kann aber auch in Abhängigkeit anderer Parameter, wie beispielsweise der Temperatur und/oder der Feuchtigkeit der Umgebung der Pflanzen gewählt werden. Dies kann je nach Pflanzenart unterschiedlich sein. Zur Simulation eines durchschnittlichen natürlichen Tag-/Nachtrhythmus kann beispielsweise die Dauer des ersten Zeitabschnitts und die Dauer des zweiten Zeitabschnitts auf jeweils 12 Stunden festgesetzt werden.

Bei den Verfahrensschritten kann in einem Gewächshaus eine Analysestation genutzt werden, die ausgebildet ist, den biologischen Zustand von Pflanzen hinsichtlich wenigstens eines biologischen Parameters zu erfassen, und die automatisch angesteuerte Transportvorrichtung ausgebildet und eingerichtet ist, den wenigstens einen Pflanzenträger aus dem ersten Pflanzenwachstumsraum oder aus dem zweiten Pflanzenwachstumsraum automatisch an die Analysestation zu transportieren, so dass die auf dem wenigstens einen Pflanzenträger gelagerten Pflanzen an der Analysestation hinsichtlich wenigstens eines biologischen Parameters erfasst werden können.

Die Analysestation kann durch einen eigenen, von dem ersten Pflanzenwachstumsraum und dem zweiten Pflanzenwachstumsraum separaten Analyseraum gebildet werden. Alternativ kann die Analysestation in den ersten Pflanzenwachstumsraum oder den zweiten Pflanzenwachstumsraum integriert sein. Die Analysestation kann sich auch in einem Transferweg zwischen dem ersten Pflanzenwachstumsraum und dem zweiten Pflanzenwachstumsraum befinden. Die Analysestation wird insbesondere mannlos betrieben, d.h. automatisch betrieben. Die Analysestation verfügt dazu über entsprechende Sensorik, welche die erforderlichen Parameter erfassen. Bei Nichterfüllen dieser Parameter kann der Pflanzenträger und/oder der Regalständer an einen manuellen Kontrollplatz (z.B. zur Quarantäne) gefahren werden.

Generell kann an der Analysestation jeder beliebige gewünschte biologische Zustand erfasst, analysiert und bewertet werden. In Abhängigkeit des erfassten, analysierten und/oder bewerteten biologischen Zustands kann die Steuervorrichtung eingerichtet sein, den Pflanzenträger mit den analysierten Pflanzen entweder dem ersten Pflanzenwachstumsraum oder dem zweiten Pflanzenwachstumsraum zuzuweisen oder den Pflanzenträger der Beschickungsstation zuzuweisen. Die Beschickungsstation kann ausgebildet sein, die Pflanzen bzw. die Pflanzenträger aus dem Gewächshaus herauszubringen, sei es zur bestimmungsgemäßen Verwendung oder zur Aussortierung.

Gemäß einer Weiterbildung der Verfahrensschritte kann an der Analysestation als biologischer Parameter der Wachstumszustand der Pflanzen, ein Schädlingsbefall der Pflanzen, ein Feuchtegrad des Pflanzensubstrats der Pflanzen und/oder ein Nährstoffgehalt des Pflanzensubstrats der Pflanzen erfasst werden.

Die Steuervorrichtung des Gewächshauses kann ausgebildet und eingerichtet sein, beispielsweise in Abhängigkeit des erfassten, analysierten und/oder bewerteten biologischen Zustands des Wachstumszustand der Pflanzen, des Feuchtegrads des Pflanzensubstrats der Pflanzen und/oder des Nährstoffgehalts des Pflanzensubstrats der Pflanzen die Pflanzenträger mittels der Transportvorrichtungen automatisch für eine verlängerte Dauer oder eine verkürzte Dauer in den ersten oder zweiten Pflanzenwachstumsraum zu verbringen und insbesondere im Falle des zweiten Pflanzenwachstumsraums die Pflanzenträger an die erfindungsgemäßen Versorgungseinrichtungen anzukoppeln, um dort in Abhängigkeit des erfassten, analysierten und/oder bewerteten biologischen Zustands den Pflanzen bzw. den Pflanzensubstraten mehr oder weniger Wasser, Nährlösung und/oder konditionierte Luft zuzuführen und/oder verbrauchte Nährlösung abzusaugen.

Bei den Verfahrensschritten kann der wenigstens eine mit Pflanzen ausgestattete Pflanzenträger in einem mobilen Regalständer abgelegt werden, der wenigstens zwei Lagerebenen zum Tragen von Pflanzenträgern und jeweils zwischen zwei Lagerebenen eine Zugangsöffnung aufweist, und der mobile Regalständer kann dabei mittels eines automatisch angesteuerten, bodengebundenen Fahrzeugs als Transportvorrichtung in den zweiten Pflanzenwachstumsraum transportiert werden und der mobile Regalständer kann dabei mittels des Fahrzeugs an eine im zweiten Pflanzenwachstumsraum positionierte Versorgungseinrichtung automatisch herangefahren werden, derart, dass die Versorgungsmittel der Versorgungseinrichtung von außerhalb des mobilen Regalständers über die Zugangsöffnung des mobilen Regalständers hinweg in das Innere des mobilen Regalständers hineinreichen, so dass die Versorgungsmittel der Versorgungseinrichtung die in den Pflanzenträgern vorhandenen Pflanzen entsprechend versorgen können, solange der mobile Regalständer an die Versorgungseinrichtung angekoppelt ist.

Der mobile Regalständer kann seine Mobilität dadurch erlangen, dass er derart ausgebildet ist, dass der mobile Regalständer von einem der Transportvorrichtung unterfahren werden kann und der mobile Regalständer von der Transportvorrichtung angehoben und durch automatisches Fahren der Transportvorrichtung auf einem Untergrund automatisch fortbewegt werden kann. Die Transportvorrichtung weist eine Hubeinrichtung auf. Die Transportvorrichtung bzw. die Hubvorrichtung kann beispielsweise gemäß WO 2017/167436 A1 ausgebildet sein.

Der mobile Regalständer kann wenigstens zwei oder mehr Lagerebenen aufweisen. Die Lagerebenen sind vorzugsweise übereinander und vertikal zueinander fluchtend am Regalständer angeordnet. Jede Lagerebene kann eine Wanne aufweisen bzw. jede Lagerebene kann von einer Wanne gebildet werden, in der ein oder mehrere Pflanzenträger gelagert werden können. Die Pflanzenträger können insoweit aus den Wannen entnehmbar sein. Die Pflanzenträger können beispielsweise einen Rahmen und als Bodenfläche ein Gitter oder ein Netz aufweisen, auf dem beispielsweise das Pflanzensubstrat aufgebracht ist. In dem Pflanzensubstrat wachsen die Pflanzen.

Der mobile Regalständer weist Standfüße auf, so dass ein von der Transportvorrichtung nicht angehobener Regalständer nicht fahrbar ist und die Mobilität des Regalständers sich erst dann einstellt, wenn der Regalständer durch die Transportvorrichtung angehoben ist. Alternativ kann der Regalständer statt Standfüße Rollen oder Räder aufweisen, so dass der Regalständer mittels der Rollen oder Räder verfahren werden kann, ohne dass der Regalständer von einer Transportvorrichtung angehoben sein muss. Der Regalständer bildet in einer solchen Ausführungsart dann einen Regalwagen. Der Regalwagen kann beispielsweise durch ein autonomes Fahrzeug geschleppt werden, oder manuell durch eine Person geschoben werden.

Die Zugangsöffnung bzw. die Zugangsöffnungen können bereits durch freie Abstände der Lagerebenen bzw. der Pflanzenträger an dem Regalständer gebildet werden. Dies kann insbesondere dann der Fall sein, wenn der Regalständer lediglich von Regalböden oder Schienen gebildet wird, die an vorzugsweise vier vertikalen Säulen des Regalständers positioniert und auf Abstand gehalten sind.

Die eine Transportvorrichtung oder die mehreren Transportvorrichtungen werden von bodengebundenen Fahrzeugen gebildet, die automatisch angesteuert navigiert werden. Die Fahrzeuge können beispielsweise in Art von an sich bekannten fahrerlosen Transportsystemen (FTS) ausgebildet sein. Alternativ können die Fahrzeuge in Art von mobilen Robotern ausgebildet sein.

Es können mehrere Versorgungseinrichtungen vorgesehen sein. Mehrere Versorgungseinrichtungen können jeweils ein Versorgungsmodul bilden, wobei die Versorgungseinrichtungen Einzelkomponenten eines baukastenartigen Systems sein können. Dabei kann jede Versorgungseinrichtung mit standardisierten Schnittstellen versehen sein, so dass zwei oder mehrere Versorgungseinrichtungen zu einem Verbund zusammengekoppelt werden können.

Die Versorgungsmittel sind Einrichtungen, die jeweils an der Versorgungseinrichtung angebracht sind und ausgebildet sind die Pflanzen und die Pflanzenträger, insbesondere das Pflanzensubstrat in den Pflanzenträgern, mit den entsprechenden Betriebsmitteln, wie beispielsweise Luft, Wasser, Licht und Nährstoffe zu versorgen, wenn der mobile Regalständer an die jeweilige Versorgungseinrichtung angekoppelt ist.

Wenn die Versorgungsmittel über die Zugangsöffnungen des mobilen Regalständers hinweg in das Innere des mobilen Regalständers hineinreichen können die Pflanzen bzw. die Pflanzenträger in unmittelbarer räumlicher Nähe mit den entsprechenden Betriebsmitteln, wie beispielsweise Luft, Wasser, Licht und Nährstoffe versorgt werden, insbesondere dadurch, dass beispielsweise das Licht, das Wasser und die Nährstoffe von oben auf die Pflanzen oder das Pflanzensubstrat in den Pflanzenträgern aufgebracht werden.

Die Versorgungseinrichtungen können in einer ersten Ausführungsform stationäre Versorgungseinrichtungen sein, die in dem zweiten Pflanzenwachstumsraum fest installiert sind. Dazu kann eine einzelne Versorgungseinrichtung oder mehrere Versorgungseinrichtungen beispielsweise an einer Raumwand des zweiten Pflanzenwachstumsraums befestigt sein oder insbesondere voneinander wegweisend, gegenüberliegend an einer Zwischenwand, die in den Raum des zweiten Pflanzenwachstumsraum hineinreicht, befestigt sein.

Die Versorgungseinrichtungen können in einer zweiten Ausführungsform als mobile Versorgungseinrichtung ausgebildet sein.

Die mobile Versorgungseinrichtung kann Standfüße aufweisen, so dass eine von der Transportvorrichtung nicht angehobener Versorgungseinrichtung zwar nicht fahrbar ist, aber die Mobilität der Versorgungseinrichtung sich dann einstellt, wenn die Versorgungseinrichtung durch die Transportvorrichtung angehoben ist. Alternativ kann die Versorgungseinrichtung statt Standfüße Rollen oder Räder aufweisen, so dass die Versorgungseinrichtung mittels der Rollen oder Räder verfahren werden kann, ohne dass die Versorgungseinrichtung von einer Transportvorrichtung angehoben sein muss. Die Versorgungseinrichtung bildet in einer solchen Ausführungsart dann eine rollende Versorgungseinrichtung.

Die Versorgungseinrichtung des Gewächshauses weist auf:
- einen Grundträger,
- wenigstens zwei am Grundträger in unterschiedlichen Höhenlagen angeordnete Kragträger, von denen jeder Kragträger wenigstens ein Versorgungsmittel aufweist, das ausgebildet ist, auf eine Pflanze in einem Pflanzenträger einzuwirken, wenn der Pflanzenträger an die Versorgungseinrichtung angekoppelt ist,
- wenigstens einen Betriebsmittel-Anschluss, der ausgebildet ist, wenigstens ein aus einem Versorgungsnetz bereitgestelltes Betriebsmittel zur Versorgung der Pflanzen den Versorgungsmitteln zuzuführen.

Der Grundträger kann beispielsweise von einer sich zumindest im Wesentlichen vertikal erstreckenden Rückwand gebildet werden. Der Grundträger bzw. die Rückwand kann hohl ausgebildet sein, so dass Versorgungsleitungen in dem hohlen Grundträger bzw. in der hohlen Rückwand verlaufen können, die zu den Kragträgern d.h. zu den Versorgungsmitteln führen.

Die Kragträger erstrecken sich zumindest im Wesentlichen horizontal von dem Grundträger bzw. der Rückwand weg. An der jeweiligen Unterseite der Kragträger sind die Versorgungsmittel angeordnet. Wenn ein Pflanzenträger an die Versorgungseinrichtung angekoppelt ist, dann überdecken die Kragträger und damit die Versorgungsmittel die in den Pflanzträgern vorhandenen Pflanzen und das Pflanzensubstrat und die Pflanzen bzw. die Pflanzenträger können in unmittelbarer räumlicher Nähe mit den entsprechenden Betriebsmitteln, wie beispielsweise Luft, Wasser, Licht und Nährstoffe versorgt werden, insbesondere dadurch, dass beispielsweise das Licht, das Wasser und die Nährstoffe von oben auf die Pflanzen oder das Pflanzensubstrat in den Pflanzenträgern aufgebracht werden und dadurch auf die Pflanzen einwirken.

Der Betriebsmittel-Anschluss kann einen oder mehrere Stecker, Buchsen und/oder Kupplungen aufweisen. Jeder Stecker, jede Buchse und/oder jede Kupplung ist entsprechend seines zu übertragenden Betriebsmittels konstruktiv ausgebildet. Die Betriebsmittel können insbesondere aus der Gruppe von elektrischer Energie, Wasser, Nährstofflösungen und Luft zusammengestellt sein. Die elektrische Energie kann nicht nur zur Versorgung von elektrischen Leuchtmitteln dienen, um das künstliche Licht für die Pflanzen zu erzeugen, sondern die elektrische Energie kann auch dazu genutzt werden, um beispielsweise angesteuert von der Steuervorrichtung automatisch Ventile für den Wasserzulauf, für die Frischluftversorgung oder das Absaugen von verbrauchter Nährlösung zu öffnen oder zu schließen. Die elektrische Energie kann auch elektrische Heizmittel der Versorgungseinrichtung versorgen, welche Heizmittel ausgebildet sein können, das Wasser, die Nährlösung oder die Luft vorzuwärmen. Die elektrische Energie kann auch zum Betrieb von Ventilatoren der Versorgungseinrichtung dienen.

Die Betriebsmittel sind insoweit elektrische Energie, Wasser, die Nährlösung und/oder Luft.

An der Versorgungseinrichtung kann in einer ersten Ausführung das Betriebsmittel elektrische Energie sein und das Versorgungsmittel wenigstens ein elektrisches Leuchtmittel sein, das ausgebildet ist, betrieben von der elektrischen Energie Licht in einem das Pflanzenwachstum fördernden Lichtspektrum in eine Richtung auszusenden, in der die Pflanzen mit diesem Licht bestrahlt werden, wenn der Pflanzenträger mit den Pflanzen an die Versorgungseinrichtung angekoppelt ist.

An der Versorgungseinrichtung kann in einer alternativen oder ergänzenden zweiten Ausführung das Betriebsmittel Wasser oder eine Nährlösung sein und das Versorgungsmittel wenigstens eine Austrittsdüse sein, die ausgebildet ist, das Wasser oder die Nährlösung abzugeben, so dass die Pflanzen oder ein Pflanzensubstrat der Pflanzen das Wasser oder die Nährlösung aufnehmen können, wenn der Pflanzenträger mit den Pflanzen an die Versorgungseinrichtung angekoppelt ist.

An der Versorgungseinrichtung kann in einer alternativen oder ergänzenden dritten Ausführung das Betriebsmittel ein Unterdruck sein und das Versorgungsmittel wenigstens eine Saugdüse sein, die ausgebildet ist, Abwasser oder verbrauchte Nährlösung von einem Pflanzensubstrat der Pflanzen abzusaugen, wenn der Pflanzenträger mit den Pflanzen an die Versorgungseinrichtung angekoppelt ist.

An der Versorgungseinrichtung kann in einer alternativen oder ergänzenden vierten Ausführung das Betriebsmittel konditionierte Luft sein und das Versorgungsmittel wenigstens eine Klimadüse sein, die ausgebildet ist, konditionierte Luft abzugeben, so dass die Pflanzen mit der konditionierten Luft beaufschlagt werden, wenn der Pflanzenträger mit den Pflanzen an die Versorgungseinrichtung angekoppelt ist.

In allen Ausführungsformen der Versorgungseinrichtung kann der Betriebsmittel-Anschluss wenigstens ein Kopplungsmittel aufweisen, das ausgebildet ist, in einem an ein Gegenkopplungsmittel eines Gewächshauses oder einer weiteren Versorgungseinrichtung angekoppelten Zustand das wenigstens eine Versorgungsmittel der Versorgungseinrichtung mit einem Versorgungsnetz zu verbinden, so dass das Betriebsmittel über die Versorgungsmittel den Pflanzen zugeführt werden kann, wenn der Pflanzenträger mit den Pflanzen an die Versorgungseinrichtung angekoppelt ist.

Das Kopplungsmittel kann einen oder mehrere Stecker, Buchsen und/oder Kupplungen aufweisen. Jeder Stecker, jede Buchse und/oder jede Kupplung ist entsprechend seines zu übertragenden Betriebsmittels konstruktiv ausgebildet. Die Betriebsmittel können insbesondere aus der Gruppe von elektrischer Energie, Wasser, Nährstofflösungen und Luft zusammengestellt sein.

Das Gegenkopplungsmittel kann einen oder mehrere Stecker, Buchsen und/oder Kupplungen aufweisen. Jeder Stecker, jede Buchse und/oder jede Kupplung ist entsprechend seines zu übertragenden Betriebsmittels konstruktiv ausgebildet. Die Betriebsmittel können insbesondere aus der Gruppe von elektrischer Energie, Wasser, Nährstofflösungen und Luft zusammengestellt sein. Das Gegenkopplungsmittel ist dabei korrespondierend zu dem Kopplungsmittel ausgebildet, d.h. im zusammengesteckten Zustand mit dem Kopplungsmittel zusammenwirkend ausgebildet, derart, dass im zusammengesteckten Zustand das entsprechende Betriebsmittel übertragen werden kann.

Bei der Versorgungseinrichtung kann der Betriebsmittel-Anschluss von wenigstens einem Kopplungsmittel und wenigstens einem Gegenkopplungsmittel gebildet werden, so dass zwei oder mehrere Versorgungseinrichtungen seriell oder parallel aneinandergekoppelt werden können, um die zwei oder mehrere Versorgungseinrichtungen über einen gemeinsamen Versorgungsnetz-Anschluss mit dem Betriebsmittel versorgen zu können.

Bei einer seriellen Anordnung von zwei oder mehreren Versorgungseinrichtungen können die Versorgungseinrichtungen nebeneinander aufgestellt werden und jeweils über ihre Kopplungsmittel und Gegenkopplungsmittel einer nach dem anderen zur Übertragung der Betriebsmittel verbunden werden. Dabei genügt es, wenn eine einzige der mehreren Versorgungseinrichtungen mit dem Versorgungsnetz direkt verbunden wird und die jeweils anderen Versorgungseinrichtungen über diese eine an das Versorgungsnetz direkt angeschlossene Versorgungseinrichtung mit den Betriebsmitteln mittelbar versorgt werden.

Bei einer parallelen Anordnung von mehreren Versorgungseinrichtungen können die Versorgungseinrichtungen beispielsweise an gegenüberliegenden Seiten einer Zwischenwand angeordnet sein, wobei die Betriebsmittel sozusagen über zwei oder mehrere Stränge in Gruppen auf die mehreren Versorgungseinrichtungen verzweigt werden.

An der Versorgungseinrichtung können die wenigstens zwei am Grundträger in unterschiedlichen Höhenlagen angeordneten Kragträger von Deckenwänden gebildet werden, die vom Grundträger in einer horizontalen Ebene vorspringen und die nach unten weisende Wandflächen aufweisen, an denen jeweils das wenigstens eine Versorgungsmittel angeordnet ist und die ausgebildet sind, den jeweils in einer Bezugsebene zugeordneten Pflanzenträger der Transportvorrichtung zumindest im Wesentlichen zu überdecken, wenn der Pflanzenträger mit den Pflanzen an die Versorgungseinrichtung angekoppelt ist.

Die Deckenwände können in einer ersten Ausführungsvariante geschlossen flächig ausgebildet sein. In einer abgewandelten zweiten Ausführungsvariante können die Deckenwände von einzelnen Streben oder Gitterflächen gebildet werden, die dann insoweit auch Durchbrüche oder Öffnungen aufweisen können.

Die nach unten weisenden Wandflächen können demgemäß auch wahlweise geschlossen flächig ausgebildet sein oder von einzelnen Streben oder Gitterflächen der Deckenwände gebildet werden, die dann insoweit auch Durchbrüche oder Öffnungen aufweisen können.

Das automatisiert betreibbare Gewächshaus weist auf:
- wenigstens einen ersten Pflanzenwachstumsraum, der ausgebildet ist ohne künstliche Beleuchtung betrieben zu werden,
- wenigstens einen vom ersten Pflanzenwachstumsraum verschiedenen zweiten Pflanzenwachstumsraum, der mit künstlichen Leuchtmitteln zum Erzeugen von künstlichem Licht ausgestattet ist,
- wenigstens eine in dem zweiten Pflanzenwachstumsraum angeordnete Versorgungseinrichtung nach einer oder mehreren der beschriebenen Ausführungen,
- wenigstens einen mobilen Regalständer, der wenigstens zwei Lagerebenen zum Tragen von Pflanzenträgern und jeweils zwischen zwei Lagerebenen eine Zugangsöffnung aufweist,
- wenigstens ein bodengebundenes Fahrzeug, das ausgebildet ist den wenigstens einen mobilen Regalständer aufzunehmen, so dass der mobile Regalständer mittels des bodengebundenen Fahrzeugs zwischen dem ersten Pflanzenwachstumsraum und dem zweiten Pflanzenwachstumsraum hin und her transportierbar ist, und
- eine Steuervorrichtung, die ausgebildet und eingerichtet ist, das wenigstens eine bodengebundene Fahrzeug und die wenigstens eine in dem zweiten Pflanzenwachstumsraum angeordnete Versorgungseinrichtung nach einem oder mehreren der beschriebenen Ausführungen automatisch anzusteuern, derart, dass das Gewächshaus nach einer oder mehreren der beschriebenen Ausführungen von erfindungsgemäßen Verfahren automatisiert betrieben wird.

In einer ersten Weiterbildung kann das Gewächshaus eine Analysestation aufweisen, die ausgebildet ist, den biologischen Zustand von Pflanzen hinsichtlich wenigstens eines biologischen Parameters zu erfassen, wenn ein Pflanzenträger mit Pflanzen an der Analysestation positioniert ist, wobei die Analysestation Sensoren aufweist, die ausgebildet sind, als biologischen Parameter den Wachstumszustand der Pflanzen, einen Schädlingsbefall der Pflanzen, einen Feuchtegrad des Pflanzensubstrats der Pflanzen und/oder einen Nährstoffgehalt des Pflanzensubstrats der Pflanzen automatisch zu erfassen.

In einer zweiten Weiterbildung kann das Gewächshaus alternativ oder ergänzend zu einer Analysestation eine Beschickungsstation aufweisen, die ausgebildet ist, Pflanzen, Pflanzenträger und/oder mobile Regalständer automatisch in das Gewächshaus aufzunehmen oder automatisch aus dem Gewächshaus abzugeben, wobei die Steuervorrichtung ausgebildet und eingerichtet ist, den mobilen Regalständer mittels des wenigstens einen bodengebundenen Fahrzeugs aus dem ersten Pflanzenwachstumsraum oder dem zweiten Pflanzenwachstumsraum automatisch an die Beschickungsstation zu transportieren und automatisch von der Beschickungsstation in den ersten Pflanzenwachstumsraum oder den zweiten Pflanzenwachstumsraum wieder zurück zu transportieren.

Die erfindungsgemäße Lösung wird im Folgenden teilweise mit anderen Worten nochmal zusammenfassend dargestellt. Die Erfindung schlägt ein flexibles Regal- und Transportsystem vor. Dazu kann als Basis ein System bestehend aus Fahrzeugen (Transportvorrichtungen) und Mobilen Regalständern verwendet werden. Das Basissystem kann horizontal verfahrende automatische Verfahreinheiten umfassen, welche in der Lage sind mobile Regale aufzunehmen, zu transportieren und zu positionieren. Die Regale sind dabei auf den Anwendungsfall zugeschnitten. In Ergänzung zum mobilen Regal sieht die Lösung im Besonderen sogenannte Versorgungsmodule d.h. Versorgungseinrichtungen vor. Die Versorgungsmodule können alle zum Wachstum der Pflanzenkultur erforderlichen Zuleitungen für Wasser, Nährstofflösung, Beleuchtung, Ventilation aber auch Abwasserentsorgung enthalten. Das Versorgungsmodul kann singulär oder als reguläre Matrix ausgebildet sein. So können beispielsweise einzelne Versorgungsmodule an einer Wand entlang oder im Raum als gedoppeltes Modul (Rücken an Rücken) positioniert werden. Die Versorgungsmodule können untereinander gekoppelt werden, so dass je Regalreihe nur eine dezentrale Zu- und Abfuhr der Medien (bspw. Strom, Wasser etc.) erforderlich ist.

Der Systemaufbau sieht vor, dass die leeren Regale einer Beladestation beispielsweise mittels eines fahrerlosen Transportsystems (FTS), Transportfahrzeug oder einem mobilen Roboter zugeführt werden. In der Beladestation (Beschickungsstation) können die Wannen in denen die in den Pflanzenträgern befindlichen Pflanzensamen zusammen mit dem Substrat eingebracht sind, manuell oder automatisch in das mobile Regal eingesetzt werden. Das Transportfahrzeug verfährt das mobile Regal mit den Wannen beispielsweise in den Keimbereich der Anlage, wo ideale Bedingungen zur Auskeimung der Pflanze herrschen. Nach der Keimung wird das Regal durch das Transportfahrzeug beispielsweise in den Wachstumsbereich der Anlage überführt. Im Wachstumsbereich herrscht ein für die jungen Pflanzen ideales Klima zum weiteren Wachstum. Der Wachstumsbereich kann wiederrum in helle beleuchtete Räume und in dunkle Räume untergliedert sein. In den dunklen Räumen sind keine Leuchten welche die Pflanze für das Wachstum benötigt integriert. In den hellen Räumen sind die für das Wachstum erforderlichen Leuchten installiert. Hierdurch kann der Einsatz von Leuchten reduziert und optimiert werden.

Im Zuge des regelmäßigen Transportes zwischen "dunklen" und "hellen" Räumen, der auf Abruf bei stationären Prozess durchfahren die Transportfahrzeuge mit den Regalen eine Identifizierungsstation (Analysestation). Hier kann an einem zentralen Punkt der Zustand der Pflanzen auf dem Regal kontrolliert und dokumentiert werden. Aufgrund des ermittelten Zustandes der Pflanzen auf dem mobilen Regal können Entscheidung zur weiteren Verarbeitung oder speziellen Prozessen (z.B. Aussortierung) gemacht werden.

Nach Ende der Wachstumsphase werden die Regale durch das Transportfahrzeug zur Erntestation gebracht. Dort werden die Pflanzenträger aus den Wannen entladen und die Pflanzen manuell oder automatisch vom Pflanzenträger abgeerntet. Die Wannen und der Pflanzenträger (mit Wachstumsfließ) werden der Reinigung bzw. Entsorgung zugeführt. Das Transportfahrzeug verfährt das mobile Regal wieder in die Beladestation.

Um das System möglichst flexibel gestaltbar zu machen, können alle für das Pflanzenwachstum erforderlichen Zuleitungen im Versorgungsmodul integriert sein. Diese sind untereinander mittels geeigneten Schnellstecksystemen verbunden. Das Transportfahrzeug transportiert die mobilen Regale zusammen mit den Wannen zum Versorgungsmodul und positioniert diese dort so, dass die Medienzuführung gewährleistet ist.

Der Vorteil dieses Systems ist neben der hohen Flexibilität auch die Modularität im Systemaufbau welche es ermöglicht kleine, mittlere oder große Anlagen aufzubauen. Die Anlagen können auf einer Ebene oder über mehrere Ebenen aufgebaut werden, wobei jede Ebene für sich autark ist. Aufgrund der hohen Modularität des Transportfahrzeugs, der mobilen Regale aber auch der Versorgungseinheiten kann das System einfach und flexibel gestaltbar auch umgezogen und an einem anderen Ort aufgebaut werden. Aufgrund der Modularität ist es auch möglich das Regalmodul komplett in ein Einkaufscenter oder in einen z.B. Catering-Betrieb zum Verbraucher als Frischware zu transportieren.

Ein konkretes Ausführungsbeispiel der Erfindung ist in der nachfolgenden Beschreibung unter Bezugnahme auf die beigefügten Figuren näher erläutert. Konkrete Merkmale dieses exemplarischen Ausführungsbeispiels können unabhängig davon, in welchem konkreten Zusammenhang sie erwähnt sind, gegebenenfalls auch einzeln oder in weiteren Kombinationen betrachtet, allgemeine Merkmale der Erfindung darstellen.

Es zeigen:
- Fig. 1: eine schematische Draufsicht auf ein Ausführungsbeispiel eines erfindungsgemäßen Gewächshauses mit einem ersten Pflanzenwachstumsraum und einem zweiten Pflanzenwachstumsraum,
- Fig. 2: eine schematische perspektivische Darstellung einer erfindungsgemäßen Versorgungseinrichtung in Alleinstellung,
- Fig. 3: eine schematische Schnittdarstellung durch die Versorgungseinrichtung gemäß Fig. 2 in Alleinstellung,
- Fig. 4: eine schematische Schnittdarstellung durch die Versorgungseinrichtung gemäß Fig. 2 mit einem angekoppelten Pflanzenträger in Form eines mobilen Regalständers,
- Fig. 5: eine schematische perspektivische Darstellung des Pflanzenträger in Form eines mobilen Regalständers zusammen mit einer erfindungsgemäßen, automatisch angesteuerten Transportvorrichtung,
- Fig. 6: eine schematische Schnittdarstellung durch eine Lagerebene des mobilen Regalständers gemäß Fig. 5 mit einer Wanne und zwei Substraten mit Pflanzen, und

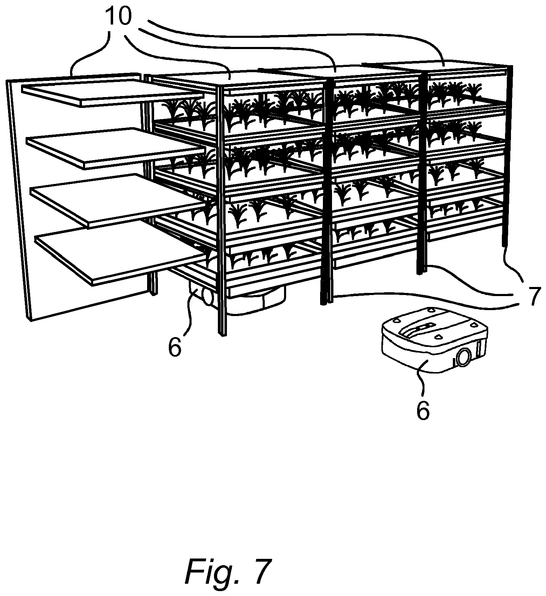

- Fig. 7: eine schematische perspektivische Darstellung einer beispielhaften Systemanordnung von mehreren Versorgungseinrichtungen, mehreren Pflanzenträgern in Form von mobilen Regalständern und mehreren automatisch angesteuerten Transportvorrichtungen.

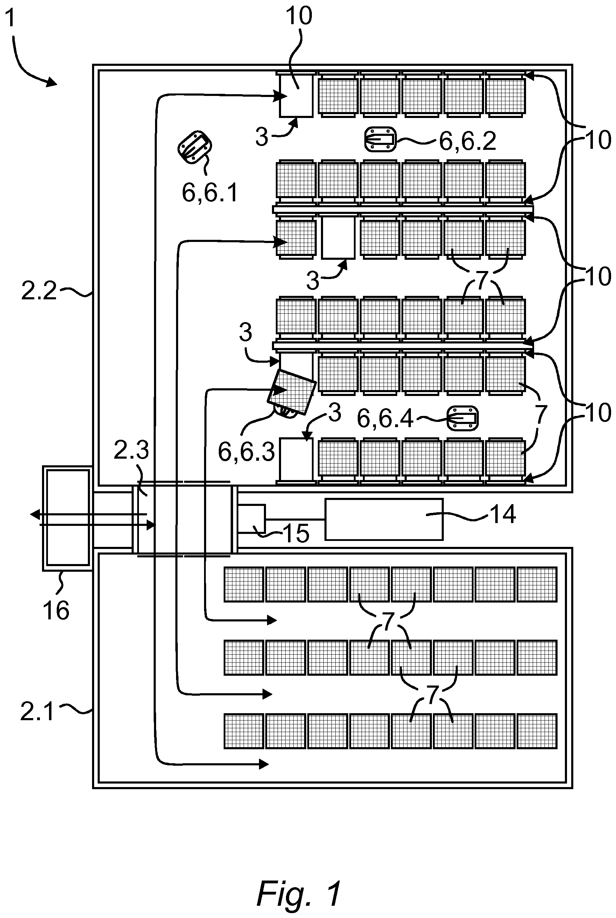

Bezugnehmend auf die Fig. 1 wird im Folgenden das grundlegende erfindungsgemäße Verfahren zum automatisierten Betreiben eines Gewächshauses 1 anhand des schematisch in einer Draufsicht dargestellten Gewächshauses 1 näher erläutert.

Das Gewächshaus 1 weist wenigstens einen ersten Pflanzenwachstumsraum 2.1 auf, der ohne künstliche Beleuchtung betrieben wird. Außerdem weist das Gewächshaus 1 wenigstens einen vom ersten Pflanzenwachstumsraum 2.1 verschiedenen zweiten Pflanzenwachstumsraum 2.2 auf, der mit künstlichen Leuchtmitteln 3 zum Erzeugen von künstlichem Licht ausgestattet ist.

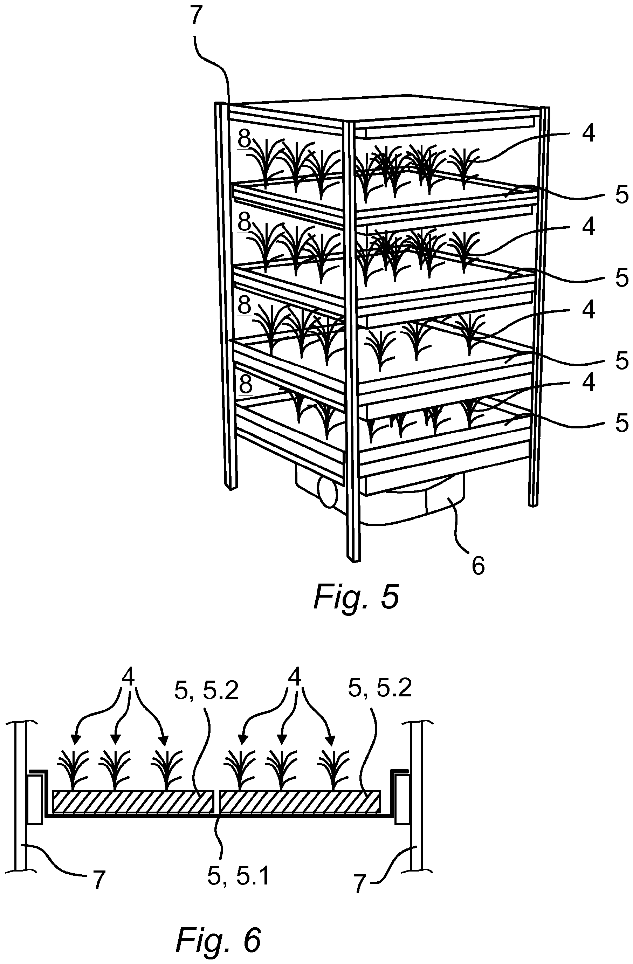

Das Verfahren weist die Schritte auf:
- automatisches Transportieren wenigstens eines mit Pflanzen 4 (Fig. 5) ausgestatteten Pflanzenträgers 5 (Fig. 5) mittels einer automatisch angesteuerten Transportvorrichtung 6 zwischen dem ersten Pflanzenwachstumsraum 2.1 und dem zweiten Pflanzenwachstumsraum 2.2 hin und her (siehe Pfeile), wobei die automatisch angesteuerte Transportvorrichtung 6 ausgebildet und eingerichtet ist:
   - den wenigstens einen Pflanzenträger 5 für die Dauer eines ersten Zeitabschnitts in dem ersten Pflanzenwachstumsraum 2.1 zu belassen, so dass die auf dem wenigstens einen Pflanzenträger 5 gelagerten Pflanzen 4 während der Dauer des ersten Zeitabschnitts sich ohne den Einfluss von künstlichem Licht in dem ersten Pflanzenwachstumsraum 2.1 weiterentwickeln, und
   - den wenigstens einen Pflanzenträger 5 für die Dauer eines vom ersten Zeitabschnitt verschiedenen zweiten Zeitabschnitts in dem zweiten Pflanzenwachstumsraum 2.2 zu belassen, so dass die auf dem wenigstens einen Pflanzenträger 5 gelagerten Pflanzen 4 während der Dauer des zweiten Zeitabschnitts sich unter dem Einfluss von künstlichem Licht der künstlichen Leuchtmittel 3 in dem zweiten Pflanzenwachstumsraum 2.2 weiterentwickeln.

Die automatisch angesteuerte Transportvorrichtung 6 umfasst im Falle des vorliegenden Ausführungsbeispiels mehrere Fahrzeuge 6.1 bis 6.4, die auch als mobile Roboter bezeichnet werden können.

Das Gewächshaus 1 weist im Falle des vorliegenden Ausführungsbeispiels der Fig. 1 außerdem eine Analysestation 2.3 auf, die ausgebildet ist, den biologischen Zustand von Pflanzen 4 hinsichtlich wenigstens eines biologischen Parameters zu erfassen. Dabei ist die automatisch angesteuerte Transportvorrichtung 6 bzw. sind die mehreren Fahrzeuge 6.1 bis 6.4 bzw. mobile Roboter ausgebildet und eingerichtet, den wenigstens einen Pflanzenträger 4 aus dem ersten Pflanzenwachstumsraum 2.1 oder aus dem zweiten Pflanzenwachstumsraum 2.2 automatisch an die Analysestation 2.3 zu transportieren, so dass die auf dem wenigstens einen Pflanzenträger 5 gelagerten Pflanzen 4 an der Analysestation 2.3 hinsichtlich wenigstens eines biologischen Parameters erfasst werden können.

An der Analysestation 2.3 können als biologischer Parameter der Wachstumszustand der Pflanzen 4, ein Schädlingsbefall der Pflanzen 4, ein Feuchtegrad des Pflanzensubstrats der Pflanzen 4 und/oder ein Nährstoffgehalt des Pflanzensubstrats der Pflanzen 4 erfasst werden.

Die Analysestation 2.3 ist im Falle des vorliegenden Ausführungsbeispiels ausgebildet, den biologischen Zustand von Pflanzen 4 hinsichtlich wenigstens eines biologischen Parameters zu erfassen, wenn ein Pflanzenträger 5 mit Pflanzen 4 an der Analysestation 2.3 positioniert ist, wobei die Analysestation 2.3 Sensoren 15 aufweist, die ausgebildet sind, als biologischen Parameter den Wachstumszustand der Pflanzen 4, einen Schädlingsbefall der Pflanzen 4, einen Feuchtegrad des Pflanzensubstrats der Pflanzen 4 und/oder einen Nährstoffgehalt des Pflanzensubstrats der Pflanzen 4 automatisch zu erfassen.

Das automatisiert betreibbare Gewächshaus 1 weist neben dem ersten Pflanzenwachstumsraum 2.1 und dem zweiten Pflanzenwachstumsraum 2.2 demgemäß eine oder mehrere in dem zweiten Pflanzenwachstumsraum 2.2 angeordnete Versorgungseinrichtungen 10 auf. Das automatisiert betreibbare Gewächshaus 1 umfasst außerdem die mehreren mobilen Regalständer 7 und mehrere bodengebundene Fahrzeuge 6.1 bis 6.4. Darüber hinaus umfasst das automatisiert betreibbare Gewächshaus 1 wenigstens eine Steuervorrichtung 14, die ausgebildet und eingerichtet ist, das wenigstens eine bodengebundene Fahrzeug 6.1 bis 6.4 und die in dem zweiten Pflanzenwachstumsraum 2.2 angeordneten Versorgungseinrichtungen 10 automatisch anzusteuern, derart, dass das Gewächshaus nach einem Verfahren wie erfindungsgemäß beschrieben betrieben wird.

Das Gewächshaus 1 weist im Falle des vorliegenden Ausführungsbeispiels auch eine Beschickungsstation 16 auf, die ausgebildet ist, Pflanzen 4, Pflanzenträger 5 und/oder mobile Regalständer 7 automatisch in das Gewächshaus 1 aufzunehmen oder automatisch aus dem Gewächshaus 1 abzugeben, wobei die Steuervorrichtung 14 ausgebildet und eingerichtet ist, den jeweiligen mobilen Regalständer 7 mittels des wenigstens einen bodengebundenen Fahrzeugs 6.1 bis 6.4 aus dem ersten Pflanzenwachstumsraum 2.1 oder dem zweiten Pflanzenwachstumsraum 2.2 automatisch an die Beschickungsstation 16 zu transportieren und automatisch von der Beschickungsstation 16 in den ersten Pflanzenwachstumsraum 2.1 oder den zweiten Pflanzenwachstumsraum 2.2 wieder zurück zu transportieren.

Wie insbesondere in Fig. 5 ersichtlich ist, können mehrere mit mehreren Pflanzen 4 ausgestattete Pflanzenträger 5 in einem mobilen Regalständer 7 abgelegt sein. Wie insbesondere in Fig. 6 in der Schnittdarstellung ersichtlich ist, kann jeder Pflanzenträger 5 eine Wanne 5.1 umfassen, die schalenartig und/oder geschlossenwandig ausgebildet sein kann. Die Wannen 5.1 enthalten wenigstens einen Substratträger 5.2, der insoweit den Pflanzenträger 5 für die Pflanzen 4 bildet. Die Wannen 5.1 verbleiben im Gewächshaus 1 bzw. am mobilen Regalständer 7, wo hingegen die als Substratträger 5.2 ausgebildeten Pflanzenträger 5 aus den Wannen 5.1 entfernt werden können und beispielsweise im Rahmen einer Ernte entnommen werden können. Die Pflanzenträger 5 können beispielsweise einen festen Rahmen, insbesondere einen Aluminiumrahmen aufweisen. Der Rahmen begrenzt ein Gitter, auf dem die Pflanzen 4 angeordnet sind. Das Gitter kann engmaschig ausgebildet sein. Jede Lagerebene kann eine Wanne 5.1 aufweisen bzw. jede Lagerebene kann von einer Wanne 5.1 gebildet werden, in der ein oder mehrere Pflanzenträger 5 d.h. Substratträger 5.2 gelagert werden können. Die Substratträger 5.2 können insoweit aus den Wannen 5.1 entnehmbar sein. Die Substratträger 5.2 können beispielsweise einen Rahmen und als Bodenfläche ein Gitter oder ein Netz aufweisen, auf dem beispielsweise das Pflanzensubstrat aufgebracht ist. In dem Pflanzensubstrat wachsen die Pflanzen 4.

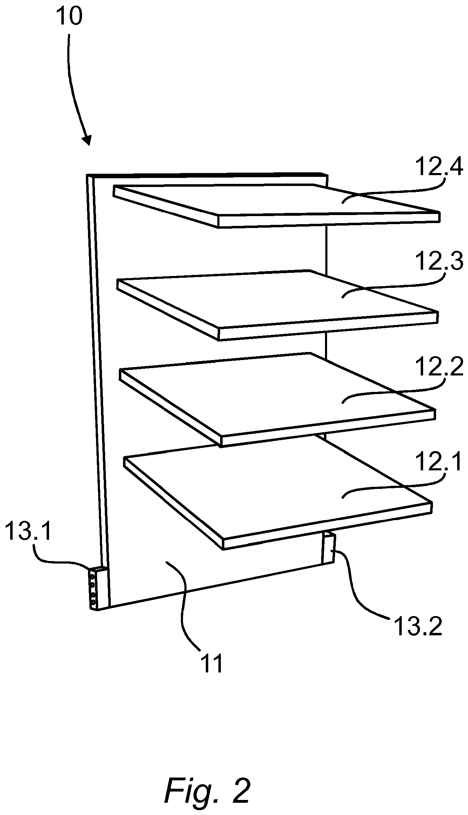

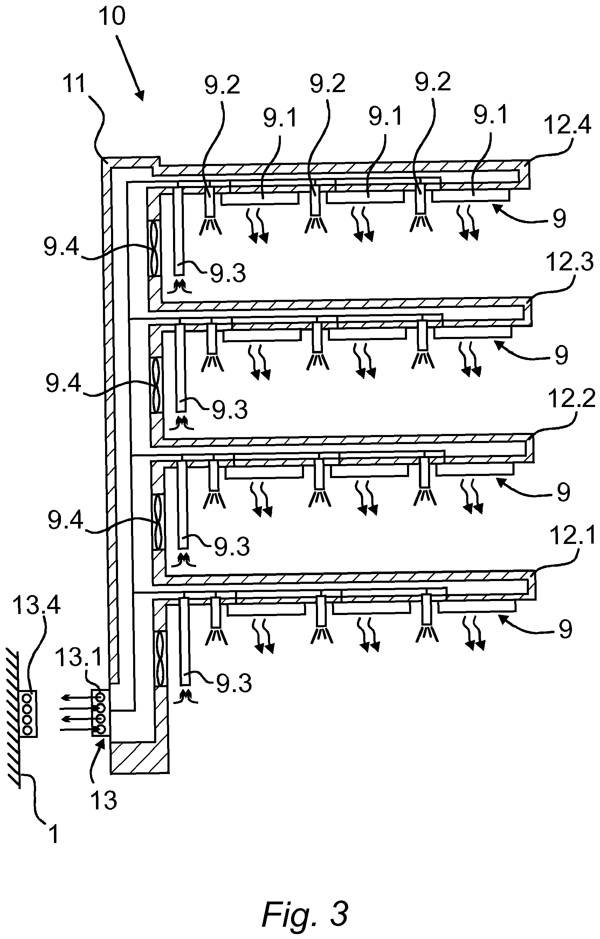

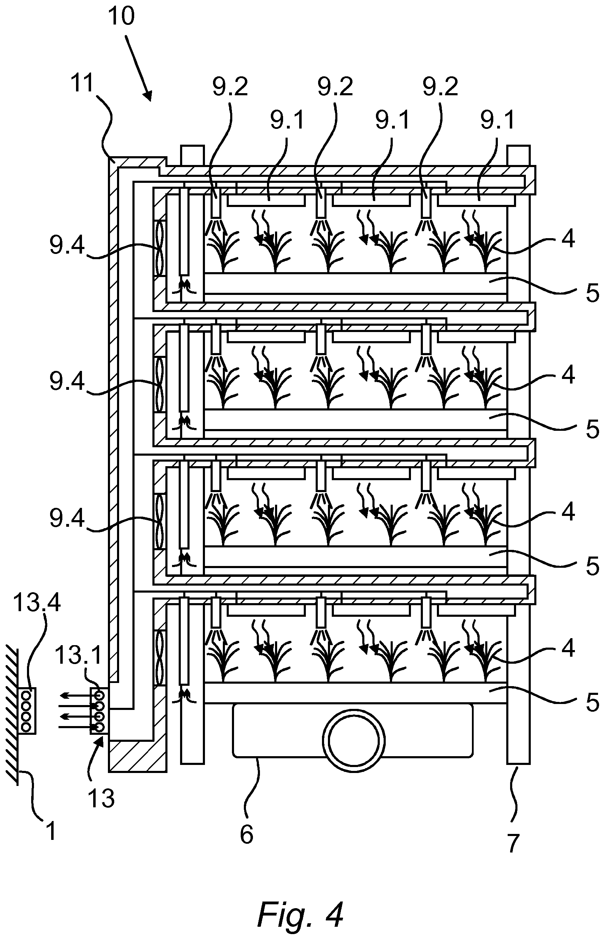

Der mobile Regalständer 7 weist wenigstens zwei, im Falle des gezeigten Ausführungsbeispiels der Fig. 5 genau vier Lagerebenen zum Tragen von Pflanzenträgern 5 und jeweils zwischen zwei Lagerebenen eine Zugangsöffnung 8 auf. Der mobile Regalständer 7 kann mittels eines der automatisch angesteuerten, bodengebundenen Fahrzeuge 6.1 bis 6.4 als Transportvorrichtung 6 in den zweiten Pflanzenwachstumsraum 2.2 transportiert werden. Dort wird der mobile Regalständer 7 mittels des Fahrzeugs 6.1 bis 6.4 an eine im zweiten Pflanzenwachstumsraum 2.2 positionierte Versorgungseinrichtung 10 (Fig. 2 bis Fig. 4) automatisch herangefahren, derart, dass die Versorgungsmittel 9 (Fig. 3, Fig. 4) der Versorgungseinrichtung 10 von außerhalb des mobilen Regalständers 7 über die Zugangsöffnungen 8 des mobilen Regalständers 7 hinweg in das Innere des mobilen Regalständers 7 hineinreichen, so dass die Versorgungsmittel 9 der Versorgungseinrichtung 10 die in den Pflanzenträgern 5 vorhandenen Pflanzen 4 entsprechend versorgen können, solange der mobile Regalständer 7 an die Versorgungseinrichtung 10 angekoppelt ist, wie dies in Fig. 4 dargestellt ist.

In Fig. 2 bis Fig. 4 ist die Versorgungseinrichtung 10 näher dargestellt. Die Versorgungseinrichtung 10 umfasst einen Grundträger 11, wenigstens zwei am Grundträger 11 in unterschiedlichen Höhenlagen angeordnete Kragträger 12.1, 12.2, 12.3, 12.4, von denen jeder Kragträger 12.1, 12.2, 12.3, 12.4 wenigstens ein Versorgungsmittel 9 aufweist, das ausgebildet ist, auf eine Pflanze 4 oder mehrere Pflanzen 4 in einem Pflanzenträger 5 einzuwirken, wenn der Pflanzenträger 5 an die Versorgungseinrichtung 10 angekoppelt ist (Fig. 4), und wenigstens einen Betriebsmittel-Anschluss 13, der ausgebildet ist, wenigstens ein aus einem Versorgungsnetz bereitgestelltes Betriebsmittel zur Versorgung der Pflanzen 4 den Versorgungsmitteln 9 zuzuführen.

Eines der Betriebsmittel kann elektrische Energie sein und das Versorgungsmittel 9 kann wenigstens ein elektrisches Leuchtmittel 9.1 sein, das ausgebildet ist, betrieben von der elektrischen Energie Licht in einem das Pflanzenwachstum fördernden Lichtspektrum in eine Richtung auszusenden, in der die Pflanzen 4 mit diesem Licht bestrahlt werden, wenn der Pflanzenträger 5 mit den Pflanzen 4 an die Versorgungseinrichtung 10 angekoppelt ist.

Im dargestellten Ausführungsbeispiel bildet ein ergänzendes zweites Betriebsmittel Wasser oder eine Nährlösung, wobei das Versorgungsmittel 9 wenigstens eine Austrittsdüse 9.2 ist, die ausgebildet ist, das Wasser oder die Nährlösung abzugeben, so dass die Pflanzen 4 oder ein Pflanzensubstrat der Pflanzen 4 das Wasser oder die Nährlösung aufnehmen können, wenn der Pflanzenträger 5 mit den Pflanzen 4 an die Versorgungseinrichtung 10 angekoppelt ist. Jedes Versorgungsmittel 9 kann wie in den Figuren dargestellt vertikal ausgerichtet angeordnet sein. Im Allgemeinen können ein oder mehrere der Versorgungsmittel 9 jedoch abweichend von der dargestellten Ausführungsart mit vertikaler Anordnung beispielsweise auch um 90 Grad gedreht in einer horizontalen Anordnung orientiert ausgebildet sein. So können die beispielsweise die Austrittsdüsen 9.2, statt die Pflanzen 4 von oben nach unten vertikal zu beregnen, ausgebildet sein, das Substrat von links nach rechts horizontal auf Höhe der Wannen 5.1 bzw. auf Höhe der Substratträger 5.2 zu befeuchten. Unabhängig davon können auch die Saugdüsen 9.3 statt von unten nach oben abzusaugen, auch seitlich absaugen. Daneben können auch die Klimadüsen 9.4 ausgebildet sein, statt wie dargestellt einer horizontalen Luftströmung, eine vertikale Luftströmung zu erzeugen.

Im dargestellten Ausführungsbeispiel bildet ein ergänzendes drittes Betriebsmittel einen Unterdruck, wobei das Versorgungsmittel 9 wenigstens eine Saugdüse 9.3 ist, die ausgebildet ist, Abwasser oder verbrauchte Nährlösung von einem Pflanzensubstrat der Pflanzen 4 abzusaugen, wenn der Pflanzenträger 5 mit den Pflanzen 4 an die Versorgungseinrichtung 10 angekoppelt ist.

Im dargestellten Ausführungsbeispiel bildet ein ergänzendes viertes Betriebsmittel konditionierte Luft und das Versorgungsmittel 9 ist wenigstens eine Klimadüse 9.4, die ausgebildet ist, konditionierte Luft abzugeben, so dass die Pflanzen 4 mit der konditionierten Luft beaufschlagt werden, wenn der Pflanzenträger 5 mit den Pflanzen 4 an die Versorgungseinrichtung 10 angekoppelt ist.

Wie in Fig. 3 und Fig. 4 ersichtlich ist, weist die Versorgungseinrichtung 10 den Betriebsmittel-Anschluss 13 auf. Der Betriebsmittel-Anschluss 13 weist wenigstens ein Kopplungsmittel 13.1 auf, das ausgebildet ist, in einem an ein Gegenkopplungsmittel 13.2 des Gewächshauses 1 (Fig. 3) oder an ein Gegenkopplungsmittel 13.3 einer weiteren Versorgungseinrichtung 10 angekoppelten Zustand das wenigstens eine Versorgungsmittel 9 der Versorgungseinrichtung 10 mit einem Versorgungsnetz zu verbinden, so dass das Betriebsmittel über die Versorgungsmittel 9 den Pflanzen 4 zugeführt werden kann, wenn der Pflanzenträger 5 mit den Pflanzen 4 an die Versorgungseinrichtung 10 angekoppelt ist.

Wie die Fig.2 auch zeigt, kann der Betriebsmittel-Anschluss 13 von wenigstens einem Kopplungsmittel 13.1 und wenigstens einem Gegenkopplungsmittel 13.3 gebildet werden, so dass zwei oder mehrere Versorgungseinrichtungen seriell oder parallel (siehe Fig. 1) aneinander gekoppelt werden können, um die zwei oder mehreren Versorgungseinrichtungen 10 über einen gemeinsamen Versorgungsnetz-Anschluss 13.4 mit dem Betriebsmittel versorgen zu können.

Die Fig. 2 bis Fig. 4 zeigen, wie die Versorgungseinrichtung 10 wenigstens zwei, im Falle des vorliegenden Ausführungsbeispiels genau vier am Grundträger 11 in unterschiedlichen Höhenlagen angeordnete Kragträger 12.1, 12.2, 12.3, 12.4 aufweisen kann, die vom Grundträger 11 jeweils in einer horizontalen Ebene als vorspringende Deckenwände ausgebildet sind. Die vorspringenden Deckenwände weisen nach unten weisende Wandflächen auf, an denen jeweils die Versorgungsmittel 9 angeordnet sind. Die Versorgungsmittel 9 sind dabei ausgebildet, den jeweils in einer Bezugsebene zugeordneten Pflanzenträger 5 der Transportvorrichtung 7 zumindest im Wesentlichen zu überdecken, wenn der Pflanzenträger 5 mit den Pflanzen 4 an die Versorgungseinrichtung 10 angekoppelt ist, wie dies insbesondere in Fig. 4 dargestellt ist.

## Patentansprüche

1. Automatisiert betreibbares Gewächshaus (1), aufweisend:
- wenigstens einen ersten Pflanzenwachstumsraum (2.1), der ausgebildet ist ohne künstliche Beleuchtung betrieben zu werden,
- wenigstens einen vom ersten Pflanzenwachstumsraum (2.1) verschiedenen zweiten Pflanzenwachstumsraum (2.2), der mit künstlichen Leuchtmitteln (3) zum Erzeugen von künstlichem Licht ausgestattet ist,
- wenigstens eine in dem zweiten Pflanzenwachstumsraum (2.2) angeordnete Versorgungseinrichtung (10), aufweisend:
- einen Grundträger (11),
- wenigstens zwei am Grundträger (11) in unterschiedlichen Höhenlagen angeordnete Kragträger (12.1, 12.2, 12.3, 12.4), von denen jeder Kragträger (12.1, 12.2, 12.3, 12.4) wenigstens ein Versorgungsmittel (9) aufweist, das ausgebildet ist, auf eine Pflanze (4) in einem Pflanzenträger (5) einzuwirken, wenn der Pflanzenträger (5) an die Versorgungseinrichtung (10) angekoppelt ist,
- wenigstens einen Betriebsmittel-Anschluss (13), der ausgebildet ist, wenigstens ein aus einem Versorgungsnetz bereitgestelltes Betriebsmittel zur Versorgung der Pflanzen (4) den Versorgungsmitteln (9) zuzuführen,
- wenigstens einen mobilen Regalständer (7), der wenigstens zwei Lagerebenen zum Tragen von Pflanzenträgern (5) und jeweils zwischen zwei Lagerebenen eine Zugangsöffnung (8) aufweist,
- wenigstens ein bodengebundenes Fahrzeug (6.1, 6.2, 6.3, 6.4), das ausgebildet ist den wenigstens einen mobilen Regalständer (7) aufzunehmen, so dass der mobile Regalständer (7) mittels des bodengebundenen Fahrzeugs (6.1, 6.2, 6.3, 6.4) zwischen dem ersten Pflanzenwachstumsraum (2.1) und dem zweiten Pflanzenwachstumsraum (2.2) hin und her transportierbar ist, wobei das wenigstens eine bodengebundene Fahrzeug (6.1, 6.2, 6.3, 6.4) ein Hubeinrichtung aufweist und der mobile Regalständer (7) Standfüße aufweist, so dass ein von dem bodengebundenen Fahrzeug (6.1, 6.2, 6.3, 6.4) nicht angehobener Regalständer (7) nicht fahrbar ist und die Mobilität des Regalständers (7) sich erst dann einstellt, wenn der Regalständer (7) durch das bodengebundene Fahrzeug (6.1, 6.2, 6.3, 6.4) angehoben ist, und
- eine Steuervorrichtung (14), die ausgebildet und eingerichtet ist, das wenigstens eine bodengebundene Fahrzeug (6.1, 6.2, 6.3, 6.4) und die wenigstens eine in dem zweiten Pflanzenwachstumsraum (2.2) angeordnete Versorgungseinrichtung (10) automatisch anzusteuern, derart, dass das Gewächshaus (1) nach einem Verfahren automatisiert betrieben wird,
aufweisend die Schritte:
- automatisches Transportieren wenigstens eines mit Pflanzen (4) ausgestatteten Pflanzenträgers (5) mittels des automatisch angesteuerten bodengebundenen Fahrzeugs (6.1, 6.2, 6.3, 6.4) zwischen dem ersten Pflanzenwachstumsraum (2.1) und dem zweiten Pflanzenwachstumsraum (2.2) hin und her, wobei das bodengebundene Fahrzeug (6.1, 6.2, 6.3, 6.4) ausgebildet und eingerichtet ist:
- den wenigstens einen Pflanzenträger (5) für die Dauer eines ersten Zeitabschnitts in dem ersten Pflanzenwachstumsraum (2.1) zu belassen, so dass die auf dem wenigstens einen Pflanzenträger (5) gelagerten Pflanzen (4) während der Dauer des ersten Zeitabschnitts sich ohne den Einfluss von künstlichem Licht in dem ersten Pflanzenwachstumsraum (2.1) weiterentwickeln, und
- den wenigstens einen Pflanzenträger (5) für die Dauer eines vom ersten Zeitabschnitt verschiedenen zweiten Zeitabschnitts in dem zweiten Pflanzenwachstumsraum (2.2) zu belassen, so dass die auf dem wenigstens einen Pflanzenträger (5) gelagerten Pflanzen (4) während der Dauer des zweiten Zeitabschnitts sich unter dem Einfluss von künstlichem Licht in dem zweiten Pflanzenwachstumsraum (2.2) weiterentwickeln.

2. Automatisiert betreibbares Gewächshaus (1) nach Anspruch 1, **dadurch gekennzeichnet, dass** das Gewächshaus eine Analysestation (2.3) aufweist, die ausgebildet ist, den biologischen Zustand von Pflanzen (4) hinsichtlich wenigstens eines biologischen Parameters zu erfassen, und das automatisch angesteuerte bodengebundene Fahrzeug (6.1, 6.2, 6.3, 6.4) ausgebildet und eingerichtet ist, den wenigstens einen Pflanzenträger (5) aus dem ersten Pflanzenwachstumsraum (2.1) oder aus dem zweiten Pflanzenwachstumsraum (2.2) automatisch an die Analysestation (2.3) zu transportieren, so dass die auf dem wenigstens einen Pflanzenträger (5) gelagerten Pflanzen (4) an der Analysestation (2.3) hinsichtlich wenigstens eines biologischen Parameters erfasst werden können.

3. Automatisiert betreibbares Gewächshaus (1) nach Anspruch 2, **dadurch gekennzeichnet, dass** an der Analysestation (2.3) als biologischer Parameter der Wachstumszustand der Pflanzen (4), ein Schädlingsbefall der Pflanzen (4), ein Feuchtegrad des Pflanzensubstrats der Pflanzen (4) und/oder ein Nährstoffgehalt des Pflanzensubstrats der Pflanzen (4) erfasst wird.

4. Automatisiert betreibbares Gewächshaus (1) nach einem der Ansprüche 1 bis 3, **dadurch gekennzeichnet, dass** der wenigstens eine mit Pflanzen (4) ausgestattete Pflanzenträger (5) in einem mobilen Regalständer (7) abgelegt wird, der wenigstens zwei Lagerebenen zum Tragen von Pflanzenträgern (5) und jeweils zwischen zwei Lagerebenen eine Zugangsöffnung (8) aufweist, und der mobile Regalständer (7) mittels des automatisch angesteuerten, bodengebundenen Fahrzeugs (6.1, 6.2, 6.3, 6.4) in den zweiten Pflanzenwachstumsraum (2.2) transportiert wird und der mobile Regalständer (7) mittels des Fahrzeugs (6.1, 6.2, 6.3, 6.4) an eine im zweiten Pflanzenwachstumsraum (2.2) positionierte Versorgungseinrichtung (10) automatisch herangefahren wird, derart, dass die Versorgungsmittel (9) der Versorgungseinrichtung (10) von außerhalb des mobilen Regalständers (7) über die Zugangsöffnung (8) des mobilen Regalständers (7) hinweg in das Innere des mobilen Regalständers (7) hineinreichen, so dass die Versorgungsmittel (9) der Versorgungseinrichtung (10) die in den Pflanzenträgern (5) vorhandenen Pflanzen (4) entsprechend versorgen können, solange der mobile Regalständer (7) an die Versorgungseinrichtung (10) angekoppelt ist.

5. Automatisiert betreibbares Gewächshaus (1) nach einem der Ansprüche 1 bis 4, **dadurch gekennzeichnet, dass** das Betriebsmittel elektrische Energie ist und das Versorgungsmittel (9) wenigstens ein elektrisches Leuchtmittel (9.1) ist, das ausgebildet ist, betrieben von der elektrischen Energie Licht in einem das Pflanzenwachstum fördernden Lichtspektrum in eine Richtung auszusenden, in der die Pflanzen (4) mit diesem Licht bestrahlt werden, wenn der Pflanzenträger (5) mit den Pflanzen (4) an die Versorgungseinrichtung (10) angekoppelt ist.

6. Automatisiert betreibbares Gewächshaus (1) nach einem der Ansprüche 1 bis 5, **dadurch gekennzeichnet, dass** das Betriebsmittel Wasser oder eine Nährlösung ist und das Versorgungsmittel (9) wenigstens eine Austrittsdüse (9.2) ist, die ausgebildet ist, das Wasser oder die Nährlösung abzugeben, so dass die Pflanzen (4) oder ein Pflanzensubstrat der Pflanzen (4) das Wasser oder die Nährlösung aufnehmen können, wenn der Pflanzenträger (5) mit den Pflanzen (4) an die Versorgungseinrichtung (10) angekoppelt ist.

7. Automatisiert betreibbares Gewächshaus (1) nach einem der Ansprüche 1 bis 6, **dadurch gekennzeichnet, dass** das Betriebsmittel ein Unterdruck ist und das Versorgungsmittel (9) wenigstens eine Saugdüse (9.3) ist, die ausgebildet ist, Abwasser oder verbrauchte Nährlösung von einem Pflanzensubstrat der Pflanzen (4) abzusaugen, wenn der Pflanzenträger (5) mit den Pflanzen (4) an die Versorgungseinrichtung (10) angekoppelt ist.

8. Automatisiert betreibbares Gewächshaus (1) nach einem der Ansprüche 1 bis 7, **dadurch gekennzeichnet, dass** das Betriebsmittel konditionierte Luft ist und das Versorgungsmittel (9) wenigstens eine Klimadüse (9.4) ist, die ausgebildet ist, konditionierte Luft abzugeben, so dass die Pflanzen (4) mit der konditionierten Luft beaufschlagt werden, wenn der Pflanzenträger (5) mit den Pflanzen (4) an die Versorgungseinrichtung (10) angekoppelt ist.

9. Automatisiert betreibbares Gewächshaus (1) nach einem der Ansprüche 1 bis 8, **dadurch gekennzeichnet, dass** der Betriebsmittel-Anschluss (13) wenigstens ein Kopplungsmittel (13.1) aufweist, das ausgebildet ist, in einem an ein Gegenkopplungsmittel (13.2, 13.3) eines Gewächshauses (1) oder einer weiteren Versorgungseinrichtung (10) angekoppelten Zustand das wenigstens eine Versorgungsmittel (9) der Versorgungseinrichtung (10) mit einem Versorgungsnetz zu verbinden, so dass das Betriebsmittel über die Versorgungsmittel (9) den Pflanzen (4) zugeführt werden kann, wenn der Pflanzenträger (5) mit den Pflanzen (4) an die Versorgungseinrichtung (10) angekoppelt ist.

10. Automatisiert betreibbares Gewächshaus (1) nach Anspruch 9, **dadurch gekennzeichnet, dass** der Betriebsmittel-Anschluss (13) von wenigstens einem Kopplungsmittel (13.1) und wenigstens einem Gegenkopplungsmittel (13.2, 13.3) gebildet wird, so dass zwei oder mehrere Versorgungseinrichtungen seriell oder parallel aneinander gekoppelt werden können, um die zwei oder mehreren Versorgungseinrichtungen (10) über einen gemeinsamen Versorgungsnetz-Anschluss (13.4) mit dem Betriebsmittel versorgen zu können.

11. Automatisiert betreibbares Gewächshaus (1) nach einem der Ansprüche 1 bis 10, **dadurch gekennzeichnet, dass** die wenigstens zwei am Grundträger (11) in unterschiedlichen Höhenlagen angeordneten Kragträger (12.1, 12.2, 12.3, 12.4) vom Grundträger (11) in einer horizontalen Ebene vorspringenden Deckenwänden gebildet werden, die nach unten weisende Wandflächen aufweisen, an denen jeweils das wenigstens eine Versorgungsmittel (9) angeordnet ist und die ausgebildet sind, den jeweils in einer Bezugsebene zugeordneten Pflanzenträger (5) der Transportvorrichtung zumindest im Wesentlichen zu überdecken, wenn der Pflanzenträger (5) mit den Pflanzen (4) an die Versorgungseinrichtung (10) angekoppelt ist.

12. Automatisiert betreibbares Gewächshaus (1) nach einem der Ansprüche 1 bis 11, **gekennzeichnet durch** eine Analysestation (2.3), die ausgebildet ist, den biologischen Zustand von Pflanzen (4) hinsichtlich wenigstens eines biologischen Parameters zu erfassen, wenn ein Pflanzenträger (5) mit Pflanzen (4) an der Analysestation (2.3) positioniert ist, wobei die Analysestation (2.3) Sensoren (15) aufweist, die ausgebildet sind, als biologischen Parameter den Wachstumszustand der Pflanzen (4), einen Schädlingsbefall der Pflanzen (4), einen Feuchtegrad des Pflanzensubstrats der Pflanzen (4) und/oder einen Nährstoffgehalt des Pflanzensubstrats der Pflanzen (4) automatisch zu erfassen.

13. Automatisiert betreibbares Gewächshaus (1) nach einem der Ansprüche 1 bis 12, **gekennzeichnet durch** eine Beschickungsstation (16), die ausgebildet ist, Pflanzen (4), Pflanzenträger (5) und/oder mobile Regalständer (7) automatisch in das Gewächshaus (1) aufzunehmen oder automatisch aus dem Gewächshaus (1) abzugeben, wobei die Steuervorrichtung (14) ausgebildet und eingerichtet ist, den mobilen Regalständer (7) mittels des wenigstens einen bodengebundenen Fahrzeugs (6.1, 6.2, 6.3, 6.4) aus dem ersten Pflanzenwachstumsraum (2.1) oder dem zweiten Pflanzenwachstumsraum (2.2) automatisch an die Beschickungsstation (16) zu transportieren und automatisch von der Beschickungsstation (16) in den ersten Pflanzenwachstumsraum (2.1) oder den zweiten Pflanzenwachstumsraum (2.2) wieder zurück zu transportieren.

14. Automatisiert betreibbares Gewächshaus (1) nach einem der Ansprüche 1 bis 13, **dadurch gekennzeichnet, dass** der mobile Regalständer (7) seine Mobilität dadurch erlangt, dass er derart ausgebildet ist, dass der mobile Regalständer (7) von dem bodengebundenen Fahrzeug (6.1, 6.2, 6.3, 6.4) unterfahren werden kann und der mobile Regalständer (7) von dem bodengebundenen Fahrzeug (6.1, 6.2, 6.3, 6.4) angehoben und durch automatisches Fahren des bodengebundenen Fahrzeugs (6.1, 6.2, 6.3, 6.4) auf einem Untergrund automatisch fortbewegt werden kann.

## Claims

1. Greenhouse (1) which is operable in an automated manner, having:
- at least one first plant growth room (2.1), which is designed to be operated without artificial lighting,
- at least one second plant growth room (2.2), which is different from the first plant growth room (2.1) and is equipped with artificial lamps (3) for producing artificial light,
- at least one supply apparatus (10), which is arranged in the second plant growth room (2.2), having:
- a base support (11),
- at least two cantilever supports (12.1, 12.2, 12.3, 12.4), which are arranged at different height positions on the base support (11) and of which each cantilever support (12.1, 12.2, 12.3, 12.4) has at least one supply means (9), which is designed to act on a plant (4) in a plant support (5) when the plant support (5) is coupled to the supply apparatus (10),
- at least one operating medium connection (13), which is designed for supplying at least one operating medium, which is provided from a supply network and is intended for supplying the plants (4), to the supply means (9),
- at least one mobile rack stand (7), which has at least two bearing levels for supporting plant supports (5) and an access opening (8) between each two bearing levels,
- at least one ground vehicle (6.1, 6.2, 6.3, 6.4), which is designed to pick up the at least one mobile rack stand (7) such that the mobile rack stand (7) can be transported to and from between the first plant growth room (2.1) and the second plant growth room (2.2) by means of the ground vehicle (6.1, 6.2, 6.3, 6.4), wherein
the at least one ground vehicle (6.1, 6.2, 6.3, 6.4) has a lifting device, and the mobile rack stand (7) has standing feet, and therefore a rack stand (7) which is not raised by the ground vehicle (6.1, 6.2, 6.3, 6.4) cannot be moved, and the rack stand (7) becomes mobile only when the rack stand (7) is raised by the ground vehicle (6.1, 6.2, 6.3, 6.4), and
- a control device (14), which is designed and configured to automatically activate the at least one ground vehicle (6.1, 6.2, 6.3, 6.4) and the at least one supply apparatus (10), which is arranged in the second plant growth room (2.2), in such a manner that the greenhouse (1) is operated in an automated manner according to a method, comprising the following steps:
- automatically transporting at least one plant support (5), which is equipped with plants (4), to and from between the first plant growth room (2.1) and the second plant growth room (2.2) by means of the automatically activated ground vehicle (6.1, 6.2, 6.3, 6.4), wherein the ground vehicle (6.1, 6.2, 6.3, 6.4) is designed and configured:
- to leave the at least one plant support (5) in the first plant growth room (2.1) for the duration of a first time segment such that the plants (4) mounted on the at least one plant support (5) are developed during the duration of the first time segment in the first plant growth room (2.1) without the influence of artificial light, and
- to leave the at least one plant support (5) in the second plant growth room (2.2) for the duration of a second time segment, which is different from the first time segment, such that the plants (4) mounted on the at least one plant support (5) are developed during the duration of the second time segment in the second plant growth room (2.2) under the influence of artificial light.

2. Greenhouse (1) which is operable in an automated manner according to claim 1, **characterized in that** the greenhouse has an analysis station (2.3), which is designed to detect the biological state of plants (4) in respect of at least one biological parameter, and the automatically activated ground vehicle (6.1, 6.2, 6.3, 6.4) is designed and configured to automatically transport the at least one plant support (5) out of the first plant growth room (2.1) or out of the second plant growth room (2.2) to the analysis station (2.3) such that the plants (4) mounted on the at least one plant support (5) can be detected in respect of at least one biological parameter at the analysis station (2.3).

3. Greenhouse (1) which is operable in an automated manner according to claim 2, **characterized in that** the growth state of the plants (4), a pest infestation of the plants (4), a degree of moisture of the plant substrate of the plants (4) and/or a nutrient content of the plant substrate of the plants (4) is detected as a biological parameter at the analysis station (2.3).

4. Greenhouse (1) which is operable in an automated manner according to one of claims 1 to 3, **characterized in that** the at least one plant support (5), which is equipped with plants (4), is deposited in a mobile rack stand (7) which has at least two bearing levels for supporting plant supports (5) and an access opening (8) between each two bearing levels, and the mobile rack stand (7) is transported into the second plant growth room (2.2) by means of the automatically activated ground vehicle (6.1, 6.2, 6.3, 6.4) and the mobile rack stand (7) is automatically driven by means of the vehicle (6.1, 6.2, 6.3, 6.4) up to a supply apparatus (10), which is positioned in the second plant growth room (2.2), in such a manner that the supply means (9) of the supply apparatus (10) reach from outside the mobile rack stand (7) beyond the access opening (8) of the mobile rack stand (7) into the interior of the mobile rack stand (7) such that the supply means (9) of the supply apparatus (10) can correspondingly supply the plants (4) present in the plant supports (5) for as long as the mobile rack stand (7) is coupled to the supply apparatus (10).

5. Greenhouse (1) which is operable in an automated manner according to one of claims 1 to 4, **characterized in that** the operating medium is electrical energy and the supply means (9) is at least one electric lamp (9.1), which is designed, when operated by the electrical energy, to emit light in a light spectrum, which promotes the plant growth, in a direction in which the plants (4) are irradiated with this light when the plant support (5) with the plants (4) is coupled to the supply apparatus (10) .

6. Greenhouse (1) which is operable in an automated manner according to one of claims 1 to 5, **characterized in that** the operating medium is water or a nutrient solution, and the supply means (9) is at least one outlet nozzle (9.2), which is designed to dispense the water or the nutrient solution such that the plants (4) or a plant substrate of the plants (4) can receive the water or the nutrient solution when the plant support (5) with the plants (4) is coupled to the supply apparatus (10).

7. Greenhouse (1) which is operable in an automated manner according to one of claims 1 to 6, **characterized in that** the operating medium as a negative pressure, and the supply means (9) is at least one suction nozzle (9.3), which is designed to suck up waste water or used nutrient solution from a plant substrate of the plants (4) when the plant support (5) with the plants (4) is coupled to the supply apparatus (10).

8. Greenhouse (1) which is operable in an automated manner according to one of claims 1 to 7, **characterized in that** the operating medium is conditioned air, and the supply means (9) is at least one air-conditioning nozzle (9.4), which is designed to dispense conditioned air such that the plants (4) are acted upon with the conditioned air when the plant support (5) with the plants (4) is coupled to the supply apparatus (10).

9. Greenhouse (1) which is operable in an automated manner according to one of claims 1 to 8, **characterized in that** the operating medium connection (13) has at least one coupling means (13.1), which is designed, in a state coupled to a mating coupling means (13.2, 13.3) of a greenhouse (1) or of a further supply apparatus (10), to connect the at least one supply means (9) of the supply apparatus (10) to a supply network such that the operating medium can be supplied via the supply means (9) to the plants (4) when the plant support (5) with the plants (4) is coupled to the supply apparatus (10).

10. Greenhouse (1) which is operable in an automated manner according to claim 9, **characterized in that** the operating medium connection (13) is formed by at least one coupling means (13.1) and at least one mating coupling means (13.2, 13.3) such that two or more supply apparatuses can be coupled to one another in series or in parallel in order to be able to supply the two or more supply apparatuses (10) with the operating medium via a common supply network connection (13.4).

11. Greenhouse (1) which is operable in an automated manner according to one of claims 1 to 10, **characterized in that** the at least two cantilever supports (12.1, 12.2, 12.3, 12.4), which are arranged at different height positions on the base support (11), are formed by ceiling walls which project from the base support (11) in a horizontal plane and have downwardly facing wall surfaces on which the at least one supply means (9) is in each case arranged and which are designed to at least substantially cover the plant support (5), which is respectively assigned in a reference plane, of the transport device when the plant support (5) with the plants (4) is coupled to the supply apparatus (10).

12. Greenhouse (1) which is operable in an automated manner according to one of claims 1 to 11, **characterized by** an analysis station (2.3), which is designed to detect the biological state of plants (4) in respect of at least one biological parameter when a plant support (5) with plants (4) is positioned at the analysis station (2.3), wherein the analysis station (2.3) has sensors (15) which are designed to automatically detect the growth state of the plants (4), a pest infestation of the plants (4), a degree of moisture of the plant substrate of the plants (4) and/or a nutrient content of the plant substrate of the plants (4) as a biological parameter.

13. Greenhouse (1) which is operable in an automated manner according to one of claims 1 to 12, **characterized by** a loading station (16), which is designed to automatically receive plants (4), plant supports (5) and/or mobile rack stands (7) in the greenhouse (1) or to automatically dispense same from the greenhouse (1), wherein the control device (14) is designed and configured to automatically transport the mobile rack stand (7) out of the first plant growth room (2.1) or the second plant growth room (2.2) to the loading station (16) by means of the at least one ground vehicle (6.1, 6.2, 6.3, 6.4) and to automatically transport same back again from the loading station (16) into the first plant growth room (2.1) or the second plant growth room (2.2) .

14. Greenhouse (1) which is operable in an automated manner according to one of claims 1 to 13, **characterized in that** the mobile rack stand (7) obtains its mobility by it being designed in such a manner that the ground vehicle (6.1, 6.2, 6.3, 6.4) can move under the mobile rack stand (7) and the mobile rack stand (7) can be raised by the ground vehicle (6.1, 6.2, 6.3, 6.4) and can be automatically moved on an underlying surface by automatic driving of the ground vehicle (6.1, 6.2, 6.3, 6.4) .

## Revendications

1. Serre (1) pouvant fonctionner de manière automatisée, présentant :
- au moins un premier espace de croissance de plantes (2.1) configuré pour fonctionner sans éclairage artificiel,
- au moins un deuxième espace de croissance de plantes (2.2) différent du premier espace de croissance de plantes (2.1), qui est équipé de moyens d'éclairage artificiels (3) pour produire de la lumière artificielle,
- au moins un appareil d'alimentation (10) agencé dans le deuxième espace de croissance de plantes (2.2), présentant :
- un support de base (11),
- au moins deux supports en porte-à-faux (12.1, 12.2, 12.3, 12.4) agencés à des hauteurs différentes sur le support de base (11), chaque support en porte-à-faux (12.1, 12.2, 12.3, 12.4) présentant au moins un moyen d'alimentation (9) qui est configuré pour agir sur une plante (4) dans un support de plantes (5) lorsque le support de plantes (5) est accouplé à l'appareil d'alimentation (10),
- au moins un raccordement de moyen de fonctionnement (13) qui est configuré pour amener aux moyens d'alimentation (9) au moins un moyen de fonctionnement fourni par un réseau d'alimentation pour l'alimentation des plantes (4),
- au moins un rayonnage mobile (7), qui présente au moins deux niveaux de stockage pour porter des supports de plantes (5) et une ouverture d'accès (8) entre deux niveaux de stockage respectifs,
- au moins un véhicule au sol (6.1, 6.2, 6.3, 6.4) qui est configuré pour recevoir l'au moins un rayonnage mobile (7), de telle sorte que le rayonnage mobile (7) peut être transporté en va-et-vient au moyen du véhicule au sol (6.1, 6.2, 6.3, 6.4) entre le premier espace de croissance de plantes (2.1) et le deuxième espace de croissance de plantes (2.2),
l'au moins un véhicule au sol (6.1, 6.2, 6.3, 6.4) présentant un appareil de levage et le rayonnage mobile (7) présentant des pieds de rayonnage, de telle sorte qu'un rayonnage (7) non soulevé par le véhicule au sol (6.1, 6.2, 6.3, 6.4) ne peut pas être déplacé et la mobilité du rayonnage (7) ne s'établit que lorsque le rayonnage (7) est soulevé par le véhicule au sol (6.1, 6.2, 6.3, 6.4), et
- un dispositif de commande (14), qui est configuré et adapté pour commander automatiquement l'au moins un véhicule au sol (6.1, 6.2, 6.3, 6.4) et l'au moins un appareil d'alimentation (10) agencé dans le deuxième espace de croissance de plantes (2.2), de telle sorte que la serre (1) fonctionne de manière automatisée selon un procédé,
présentant les étapes suivantes :
- le transport automatique en va-et-vient d'au moins un support de plantes (5) équipé de plantes (4) au moyen du véhicule au sol (6.1, 6.2, 6.3, 6.4) commandé automatiquement entre le premier espace de croissance de plantes (2.1) et le deuxième espace de croissance de plantes (2.2), le véhicule au sol (6.1, 6.2, 6.3, 6.4) étant configuré et adapté pour:
- laisser l'au moins un support de plantes (5) dans le premier espace de croissance de plantes (2.2) pendant la durée d'une première période de temps, de telle sorte que les plantes (4) stockées sur l'au moins un support de plantes (5) sont cultivées sans l'influence de lumière artificielle dans le premier espace de croissance de plantes (2.1) pendant la durée de la première période de temps, et
- laisser l'au moins un support de plantes (5) dans le deuxième espace de croissance de plantes (2.2) pendant la durée d'une deuxième période de temps différente de la première période de temps, de telle sorte que les plantes (4) stockées sur l'au moins un support de plantes (5) sont cultivées sous l'influence de lumière artificielle dans le deuxième espace de croissance de plantes (2.2) pendant la durée de la deuxième période de temps.

2. Serre (1) pouvant fonctionner de manière automatisée selon la revendication 1, **caractérisée en ce que** la serre présente une station d'analyse (2.3) qui est configurée pour détecter l'état biologique de plantes (4) en ce qui concerne au moins un paramètre biologique, et le véhicule au sol (6.1, 6.2, 6.3, 6.4) commandé automatiquement est configuré et adapté pour transporter automatiquement l'au moins un support de plantes (5) depuis le premier espace de croissance de plantes (2.1) ou depuis le deuxième espace de croissance de plantes (2.2) jusqu'à la station d'analyse (2.3), de telle sorte que les plantes (4) stockées sur l'au moins un support de plantes (5) peuvent être détectées au niveau de la station d'analyse (2.3) en ce qui concerne au moins un paramètre biologique.

3. Serre (1) pouvant fonctionner de manière automatisée selon la revendication 2, **caractérisée en ce que** l'état de croissance des plantes (4), une infestation des plantes (4) par des nuisibles, un degré d'humidité du substrat de plantes des plantes (4) et/ou une teneur en substances nutritives du substrat de plantes des plantes (4) sont détectés en tant que paramètre biologique au niveau de la station d'analyse (2.3).

4. Serre (1) pouvant fonctionner de manière automatisée selon l'une quelconque des revendications 1 à 3, **caractérisée en ce que** l'au moins un support de plantes (5) équipé de plantes (4) est déposé dans un rayonnage mobile (7) qui présente au moins deux niveaux de stockage pour porter des supports de plantes (5) et une ouverture d'accès (8) entre deux niveaux de stockage respectifs, et le rayonnage mobile (7) est transporté au moyen du véhicule au sol (6.1, 6.2, 6.3, 6.4) commandé automatiquement dans le deuxième espace de croissance de plantes (2.2) et le rayonnage mobile (7) est approché automatiquement au moyen du véhicule (6.1, 6.2, 6.3, 6.4) d'un appareil d'alimentation (10) positionné dans le deuxième espace de croissance de plantes (2.2), de telle sorte que les moyens d'alimentation (9) de l'appareil d'alimentation (10) s'étendent de l'extérieur du rayonnage mobile (7) à l'intérieur du rayonnage mobile (7) en passant par l'ouverture d'accès (8) du rayonnage mobile (7), de telle sorte que les moyens d'alimentation (9) de l'appareil d'alimentation (10) peuvent alimenter les plantes (4) présentes dans les supports de plantes (5) de manière appropriée tant que le rayonnage mobile (7) est accouplé à l'appareil d'alimentation (10).

5. Serre (1) pouvant fonctionner de manière automatisée selon l'une quelconque des revendications 1 à 4, **caractérisée en ce que** le moyen de fonctionnement est l'énergie électrique et le moyen d'alimentation (9) est au moins un moyen d'éclairage électrique (9.1) qui est configuré pour émettre, en fonctionnant à l'énergie électrique, de la lumière dans un spectre lumineux favorisant la croissance de plantes dans une direction dans laquelle les plantes (4) sont exposées à cette lumière lorsque le support de plantes (5) avec les plantes (4) est accouplé à l'appareil d'alimentation (10) .

6. Serre (1) pouvant fonctionner de manière automatisée selon l'une quelconque des revendications 1 à 5, **caractérisée en ce que** le moyen de fonctionnement est l'eau ou une solution nutritive et le moyen d'alimentation (9) est au moins une buse de sortie (9.2) qui est configurée pour distribuer l'eau ou la solution nutritive, de telle sorte que les plantes (4) ou un substrat de plantes des plantes (4) peuvent absorber l'eau ou la solution nutritive lorsque le support de plantes (5) avec les plantes (4) est accouplé à l'appareil d'alimentation (10).

7. Serre (1) pouvant fonctionner de manière automatisée selon l'une quelconque des revendications 1 à 6, **caractérisée en ce que** le moyen de fonctionnement est une dépression et le moyen d'alimentation (9) est au moins une buse d'aspiration (9.3) qui est configurée pour aspirer l'eau usée ou la solution nutritive usée d'un substrat de plantes des plantes (4) lorsque le support de plantes (5) avec les plantes (4) est accouplé à l'appareil d'alimentation (10).

8. Serre (1) pouvant fonctionner de manière automatisée selon l'une quelconque des revendications 1 à 7, **caractérisée en ce que** le moyen de fonctionnement est de l'air conditionné et le moyen d'alimentation (9) est au moins une buse de climatisation (9.4) qui est configurée pour délivrer de l'air conditionné, de telle sorte que les plantes (4) sont sollicitées par l'air conditionné lorsque le support de plantes (5) avec les plantes (4) est accouplé à l'appareil d'alimentation (10) .

9. Serre (1) pouvant fonctionner de manière automatisée selon l'une quelconque des revendications 1 à 8, **caractérisée en ce que** le raccordement de moyen de fonctionnement (13) présente au moins un moyen d'accouplement (13.1) qui est configuré pour relier, à un état accouplé à un moyen d'accouplement complémentaire (13.2, 13.3) d'une serre (1) ou d'un autre appareil d'alimentation (10), l'au moins un moyen d'alimentation (9) de l'appareil d'alimentation (10) à un réseau d'alimentation, de telle sorte que le moyen de fonctionnement peut être amené aux plantes (4) par l'intermédiaire du moyen d'alimentation (9) lorsque le support de plantes (5) avec les plantes (4) est accouplé à l'appareil d'alimentation (10).

10. Serre (1) pouvant fonctionner de manière automatisée selon la revendication 9, **caractérisée en ce que** le raccordement de moyen de fonctionnement (13) est formé par au moins un moyen d'accouplement (13.1) et au moins un moyen d'accouplement complémentaire (13.2, 13.3), de telle sorte que deux ou plus de deux appareils d'alimentation peuvent être accouplés en série ou en parallèle les uns des autres pour alimenter les deux ou plus de deux appareils d'alimentation (10) avec le moyen de fonctionnement par l'intermédiaire d'un raccordement commun au réseau d'alimentation (13.4).

11. Serre (1) pouvant fonctionner de manière automatisée selon l'une quelconque des revendications 1 à 10, **caractérisée en ce que** les au moins deux supports en porte-à-faux (12.1, 12.2, 12.3, 12.4) agencés à des hauteurs différentes sur le support de base (11) sont formés par des parois de plafond faisant saillie du support de base (11) dans un plan horizontal, qui présentent des surfaces de paroi dirigées vers le bas, sur lesquelles est agencé respectivement l'au moins un moyen d'alimentation (9) et qui sont configurées pour recouvrir au moins essentiellement le support de plantes (5) du dispositif de transport, associé respectivement dans un plan de référence, lorsque le support de plantes (5) avec les plantes (4) est accouplé à l'appareil d'alimentation (10).

12. Serre (1) pouvant fonctionner de manière automatisée selon l'une quelconque des revendications 1 à 11, **caractérisée par** une station d'analyse (2.3) qui est configurée pour détecter l'état biologique de plantes (4) en ce qui concerne au moins un paramètre biologique lorsqu'un support de plantes (5) avec des plantes (4) est positionné au niveau de la station d'analyse (2.3), la station d'analyse (2.3) présentant des capteurs (15) qui sont configurés pour détecter automatiquement, en tant que paramètres biologiques, l'état de croissance des plantes (4), une infestation des plantes (4) par des nuisibles, un degré d'humidité du substrat de plantes des plantes (4) et/ou une teneur en substances nutritives du substrat de plantes des plantes (4).

13. Serre (1) pouvant fonctionner de manière automatisée selon l'une quelconque des revendications 1 à 12, **caractérisée par** un poste de chargement (16) qui est configuré pour recevoir automatiquement des plantes (4), des supports de plantes (5) et/ou des rayonnages mobiles (7) dans la serre (1) ou pour les délivrer automatiquement depuis la serre (1), le dispositif de commande (14) étant configuré et adapté pour transporter automatiquement le rayonnage mobile (7) au moyen de l'au moins un véhicule au sol (6.1, 6.2, 6.3, 6.4) depuis le premier espace de croissance de plantes (2.1) ou depuis le deuxième espace de croissance de plantes (2.2) vers le poste de chargement (16) et pour le transporter automatiquement en retour depuis le poste de chargement (16) vers le premier espace de croissance de plantes (2.1) ou vers le deuxième espace de croissance de plantes (2.2).

14. Serre (1) pouvant fonctionner de manière automatisée selon l'une quelconque des revendications 1 à 13, **caractérisée en ce que** le rayonnage mobile (7) acquiert sa mobilité en étant configuré de telle sorte que le véhicule au sol (6.1, 6.2, 6.3, 6.4) peut se déplacer sous le rayonnage mobile (7) et le rayonnage mobile (7) peut être soulevé par le véhicule au sol (6.1, 6.2, 6.3, 6.4) et avancé automatiquement sur un sol par déplacement automatique du véhicule au sol (6.1, 6.2, 6.3, 6.4).
